# EUROPEAN PATENT SPECIFICATION

(11) **EP 4 020 181 B1**
(45) Date of publication and mention of the grant of the patent: **04.12.2024**
(21) Application number: 21198620.3
(22) Date of filing: 23.09.2021
(51) Int. Cl.: G06F 9/30, G06F 21/60, G06F 21/62

(54) **INSTRUCTION SUPPORT FOR SAVING AND RESTORING KEY INFORMATION**
BEFEHLSUNTERSTÜTZUNG ZUR SPEICHERUNG UND WIEDERHERSTELLUNG VON SCHLÜSSELINFORMATIONEN
SUPPORT D'INSTRUCTIONS POUR SAUVEGARDER ET RESTAURER DES INFORMATIONS CLÉS

(30) Priority: 26.12.2020 US 202017134348
(43) Date of publication of application: 29.06.2022
(73) Proprietor: Intel Corporation, Santa Clara, CA 95054 (US)
(72) Inventor: Chhabra, Siddhartha, Portland, OR 97229 (US); Hegde, Thripthi, Beaverton, OR 97006 (US); Elbaz, Reouven, Hillsboro, OR 97124 (US)
(74) Representative: Samson & Partner Patentanwälte mbB

(56) References cited:
- WO-A1-2020/219398
- US-A1- 2016 203 340
- US-A1- 2017 177 504

## Description

### BACKGROUND

Current processors may provide support for a trusted execution environment such as a secure enclave. Secure enclaves include segments of memory (including code and/or data) protected by the processor from unauthorized access including unauthorized reads and writes. In particular, certain processors may include Intel^{®} Software Guard Extensions (SGX) to provide secure enclave support. In particular, SGX provides confidentiality, integrity, and replay-protection to the secure enclave data while the data is resident in the platform memory and thus provides protection against both software and hardware attacks. The on-chip boundary forms a natural security boundary, where data and code may be stored in cleartext and assumed to be secure.
US 2016/203340 A1 discloses method and apparatus for securely saving and restoring the state of a computing platform.
US 2017/177504 A1 discloses instruction and logic for secure instruction execution pipelines.
WO 2020/219398 A discloses efficient side-channel-attack-resistant memory encryptor based on key update.
The subject-matter provided by the present invention is defined in independent claims, while preferred embodiments of the present invention are defined in dependent claims.

### BRIEF DESCRIPTION OF DRAWINGS

Various embodiments in accordance with the present disclosure will be described with reference to the drawings, in which:
FIG. 1 is a schematic block diagram of a computing system that provides isolation in virtualized systems using TDs, according to an implementation of the disclosure.
FIG. 2 is a block diagram depicting an example computing system implementing TD architecture according to some embodiments.
FIG. 3 illustrates embodiments using a multi-key cryptographic memory protection system.
FIG. 4 illustrates embodiments of a high-level flow for key table save/restore.
FIG. 5 illustrates embodiments of a flow for operations performed during execution of a KTABLESAVE instruction.
FIG. 6 illustrates embodiments of a flow for operations performed during execution of a KTABLERESTORE instruction.
FIG. 7 illustrates embodiments of hardware to process an instruction such as KTABLERESTORE and KTABLESAVE instructions.
FIG. 8 illustrates an embodiment of method performed by a processor to process a KTABLESAVE instruction.
FIG. 9 illustrates an embodiment of method performed by a processor to process a KTABLERESTORE instruction.
FIG. 10 illustrates embodiments of an exemplary system.
FIG. 11 illustrates a block diagram of embodiments of a processor that may have more than one core, may have an integrated memory controller, and may have integrated graphics.
FIG. 12(A) is a block diagram illustrating both an exemplary in-order pipeline and an exemplary register renaming, out-of-order issue/execution pipeline according to embodiments.
FIG. 12(B) is a block diagram illustrating both an exemplary embodiment of an in-order architecture core and an exemplary register renaming, out-of-order issue/execution architecture core to be included in a processor according to embodiments.
FIG. 13 illustrates embodiments of execution unit(s) circuitry.
FIG. 14 is a block diagram of a register architecture according to some embodiments.
FIG. 15 illustrates embodiments of an instruction format.
FIG. 16 illustrates embodiments of the addressing field.
FIG. 17 illustrates embodiments of a first prefix.
FIGS. 18(A)-(D) illustrate embodiments of how the R, X, and-bit fields of the first prefix are used.
FIGS. 19(A)-(B) illustrate embodiments of a second prefix.
FIG. 20 illustrates embodiments of a third prefix.
FIG. 21 illustrates a block diagram contrasting the use of a software instruction converter to convert binary instructions in a source instruction set to binary instructions in a target instruction set according to embodiments.

### DETAILED DESCRIPTION

The present disclosure relates to methods, apparatus, systems, and non-transitory computer-readable storage media for saving and restoring a key data structure. There are compute instances of isolation between virtual machines (VMs) running on a client machine. As an example, there may are different trust level VMs and it is desirable to run them in a cryptographically isolated manner. While large portions of the server architecture can be carried over directly, client machines require support for suspend/resume across power states such as S3 (suspend) and S4 (hibernation). These power states are supported and required on clients to get better battery life which is not a concern for servers. Current architectures do not provide any capability to save/restore keys associated with Trust Domains (TDs) which are secure isolated VMs.

Detailed herein is instruction level support to allow untrusted software to save/restore key state from the memory encryption engine to support S3/S4 flows on clients. In a first embodiment, the save/restore is done by the untrusted software and encryption hardware alone. In another embodiment, a security engine (which forms the root of trust on the platform) is involved to protect the keys before handing over to untrusted software. Either embodiment uses the instructions introduced herein which may work differently underneath depending on the implementation option chosen.

In particular, one of the instructions detailed herein allows untrusted software to instruct an encryption engine to read out the state of the key table storing KeyIDs with associated keys and modes. This may be achieved in multiple ways. In the first embodiment, the encryption engine encrypts and integrity (with replay protection) protects the entire key table with a key in fuses for the soul use of the encryption engine. In another embodiment, a security engine on the platform can be instructed to read the key table and perform the encryption and integrity protection using a fuse key which can be hosted by the security engine. The untrusted software can then save away the protected blob on disk. Similarly, for the restore flow, another instruction which can be used by untrusted software to read the protected key table blob and instruct to be installed in the encryption engine after verification. As such, VM isolation is extended to clients supporting the power states that must be supported for client machines.

In some embodiments, these instructions are package scope such that software should execute the instruction on each package in the case where different keys are associated with the same KeyID on different packages and maintain the mapping between package ID and protected key table. On restore, software should restore the right protected key table on the right package. In the most common case, there should be one single key table programmed across all packages.

As contemplated in the present disclosure, embodiments include a processor security capability called Trusted Domain Extensions (TDX) to meet increased security objectives via the use of memory encryption and integrity via memory controller engines. As used in TDX, a Trusted Domain (TD) is a protected VM. Embodiments of the present invention deter page remapping attacks from a malicious or exploited VMM on the private memory address space of a TD.

Embodiments comprise an additional extended page table (EPT) structure called a Secure Extended Page Table (SEPT) that is used by a processor for TD private page walks. The SEPT is a per-TD EPT (i.e., each TD has its own SEPT) that is managed by a Trusted Domain Resource Manager (TDRM) only via special instructions newly added to the instruction set architecture (ISA) of the processor. The TDRM cannot alter SEPT without using these instructions otherwise an integrity failure will be reported by the processor. In other embodiments, all or parts of the SEPT may be access-controlled using processor range-register protection.

In typical VM implementations, the processor supports one EPT pointer (EPTP) per virtual memory control structure (VMCS). The VMCS is a data structure in memory that exists once per VM, while the VM is managed by the VMM. With every change of the execution context between different VMs, the VMCS is restored for the current VM, thereby defining the state of the VM's virtual processor. The VMM manages the EPT referenced by the EPTP. In embodiments of the present invention, the VMs may be encapsulated by TDs, and the VMCS may be replaced by an analogous control structure called the Trusted Domain Control Structure (TDCS) that manages the guest state of TDs.

An architecture to provide isolation in virtualized systems using trust domains (TDs) is described. A current trend in computing is the placement of data and enterprise workloads in the cloud by utilizing hosting services provided by cloud service providers (CSPs). As a result of the hosting of the data and enterprise workloads in the cloud, customers (referred to as tenants herein) of the CSPs are requesting better security and isolation solutions for their workloads. In particular, customers are seeking out solutions that enable the operation of CSP-provided software outside of a TCB of the tenant's software. The TCB of a system refers to a set of hardware, firmware, and/or software components that have an ability to influence the trust for the overall operation of the system.

In implementations of the disclosure, a TD architecture and instruction set architecture (ISA) extensions (referred to herein as TD extensions (TDX)) for the TD architecture is provided to provide confidentiality (and integrity) for customer (tenant) software executing in an untrusted CSP infrastructure. The TD architecture, which can be a System-on-Chip (SoC) capability, provides isolation between TD workloads and CSP software, such as a virtual machine manager (VMM) of the CSP. Components of the TD architecture can include 1) memory encryption via a MK-Total Memory Encryption (MKTME) engine, 2) a resource management capability referred to herein as the trust domain resource manager (TDRM) (a TDRM may be a software extension of the Virtual Machine Monitor (VMM)), and 3) execution state and memory isolation capabilities in the processor provided via a CPU-managed Memory Ownership Table (MOT) and via CPU access-controlled TD control structures. The TD architecture provides an ability of the processor to deploy TDs that leverage the MK-TME engine, the MOT, and the access-controlled TD control structures for secure operation of TD workloads.

In one implementation, the tenant's software is executed in an architectural concept known as a TD. A TD (also referred to as a tenant TD) refers to a tenant workload (which can comprise an operating system (OS) alone along with other ring-3 applications running on top of the OS, or a virtual machine (VM) running on top of a VMM along with other ring-3 applications, for example). Each TD operates independently of other TDs in the system and uses logical processor(s), memory, and I/O assigned by the TDRM on the platform. Each TD is cryptographically isolated in memory using at least one exclusive encryption key of the MK-TME engine for encrypting the memory (holding code and/or data) associated with the trust domain.

In implementations of the disclosure, the TDRM in the TD architecture acts as a host for the TDs and has full control of the cores and other platform hardware. A TDRM assigns software in a TD with logical processor(s). The TDRM, however, cannot access a TD's execution state on the assigned logical processor(s). Similarly, a TDRM assigns physical memory and I/O resources to the TDs, but is not privy to access the memory state of a TD due to the use of separate encryption keys enforced by the processors per TD, and other integrity and replay controls on memory. Software executing in a TD operates with reduced privileges so that the TDRM can retain control of platform resources. However, the TDRM cannot affect the confidentiality or integrity of the TD state in memory or in the CPU structures under defined circumstances.

Conventional systems for providing isolation in virtualized systems do not extract the CSP software out of the tenant's TCB completely. Furthermore, conventional systems may increase the TCB significantly using separate chipset subsystems that implementations of the disclosure avoid. The TD architecture of implementations of the disclosure provides isolation between customer (tenant) workloads and CSP software by explicitly reducing the TCB by removing the CSP software from the TCB. Implementations provide a technical improvement over conventional systems by providing secure isolation for CSP customer workloads (tenant TDs) and allow for the removal of CSP software from a customer's TCB while meeting security and functionality requirements of the CSP. In addition, the TD architecture is scalable to multiple TDs, which can support multiple tenant workloads. Furthermore, the TD architecture described herein is generic and can be applied to any dynamic random-access memory (DRAM), or storage class memory (SCM)-based memory, such as Non-Volatile Dual In-line Memory Module (NVDIMM). As such, implementations of the disclosure allow software to take advantage of performance benefits, such as NVDIMM direct access storage (DAS) mode for SCM, without compromising platform security requirements.

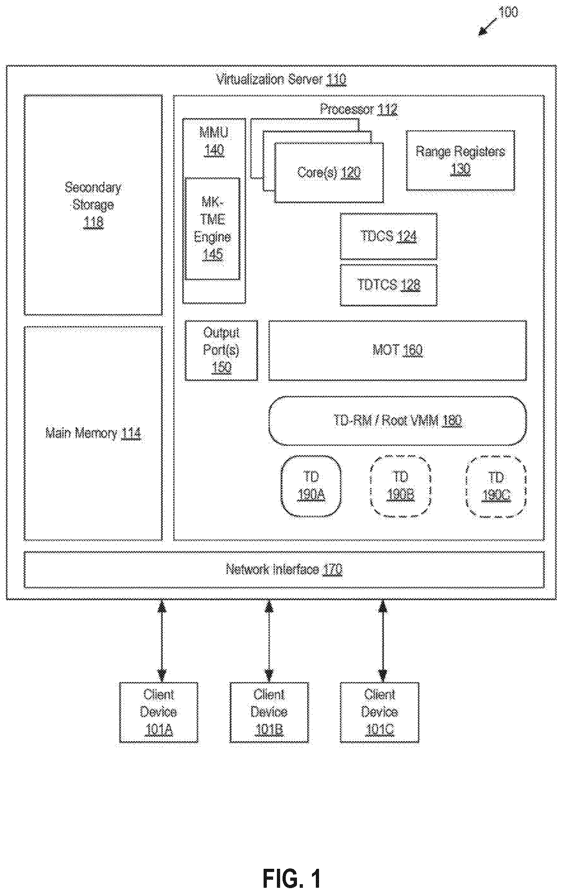

FIG. 1 is a schematic block diagram of a computing system 100 that provides isolation in virtualized systems using TDs, according to an implementation of the disclosure. The virtualization system 100 includes a virtualization server 110 that supports a number of client devices 101A-101 C. The virtualization server 110 includes at least one processor 112 (also referred to as a processing device) that executes a TDRM 180. The TDRM 180 may include a VMM (may also be referred to as hypervisor) that may instantiate one or more TDs 190A-190C accessible by the client devices 101A-101C via a network interface 170. The client devices 101A-101 C may include, but is not limited to, a desktop computer, a tablet computer, a laptop computer, a netbook, a notebook computer, a personal digital assistant (PDA), a server, a workstation, a cellular telephone, a mobile computing device, a smart phone, an Internet appliance or any other type of computing device.

A TD may refer to a tenant (e.g., customer) workload. The tenant workload can include an OS alone along with other ring-3 applications running on top of the OS, or can include a VM running on top of a VMM along with other ring-3 applications, for example. In implementations of the disclosure, each TD may be cryptographically isolated in memory using a separate exclusive key for encrypting the memory (holding code and data) associated with the TD.

Processor 112 may include one or more cores 120 (also referred to as processing cores 120), range registers 130, a memory management unit (MMU) 140, and output port(s) 150. TDRM 180 communicates with a MOT 160 and one or more trust domain control structure(s) (TDCS(s)) 124 and trust domain thread control structure(s) (TDTCS(s)) 128. TDTCS and TD-TCS may be used interchangeable herein. Processor 112 may be used in a system that includes, but is not limited to, a desktop computer, a tablet computer, a laptop computer, a netbook, a notebook computer, a PDA, a server, a workstation, a cellular telephone, a mobile computing device, a smart phone, an Internet appliance or any other type of computing device. In another implementation, processor 112 may be used in a SoC system.

The computing system 100 is representative of processing systems based on micro-processing devices available from Intel Corporation of Santa Clara, Calif., although other systems (including PCs having other micro-processing devices, engineering workstations, set-top boxes and the like) may also be used. In one implementation, sample system 100 executes a version of the WINDOWS^{™} operating system available from Microsoft Corporation of Redmond, Wash., although other operating systems (UNIX and Linux for example), embedded software, and/or graphical user interfaces, may also be used. Thus, implementations of the disclosure are not limited to any specific combination of hardware circuitry and software.

The one or more processing cores 120 execute instructions of the system. The processing core 120 includes, but is not limited to, pre-fetch logic to fetch instructions, decode logic to decode the instructions, execution logic to execute instructions and the like. In an implementation, the computing system 100 includes a component, such as the processor 112 to employ execution units including logic to perform algorithms for processing data.

The virtualization server 110 includes a main memory 114 and a secondary storage 118 to store program binaries and OS driver events. Data in the secondary storage 118 may be stored in blocks referred to as pages, and each page may correspond to a set of physical memory addresses. The virtualization server 110 may employ virtual memory management in which applications run by the core(s) 120, such as the TDs 190A-190C, use virtual memory addresses that are mapped to guest physical memory addresses, and guest physical memory addresses are mapped to host/system physical addresses by MMU 140.

The core 120 may execute the MMU 140 to load pages from the secondary storage 118 into the main memory 114 (which includes a volatile memory and/or a nonvolatile memory) for faster access by software running on the processor 112 (e.g., on the core). When one of the TDs 190A-190C attempts to access a virtual memory address that corresponds to a physical memory address of a page loaded into the main memory 114, the MMU 140 returns the requested data. The core 120 may execute the VMM portion of TDRM 180 to translate guest physical addresses to host physical addresses of main memory and provide parameters for a protocol that allows the core 120 to read, walk and interpret these mappings.

In one implementation, processor 112 implements a TD architecture and ISA extensions (TDX) for the TD architecture. The TD architecture provides isolation between TD workloads 190A-190C and from CSP software (e.g., TDRM 180 and/or a CSP VMM (e.g., root VMM 180)) executing on the processor 112). Components of the TD architecture can include 1) memory encryption via MK-TME engine 145, 2) a resource management capability referred to herein as the TDRM 180, and 3) execution state and memory isolation capabilities in the processor 112 provided via a MOT 160 and via access-controlled TD control structures (i.e., TDCS 124 and TDTCS 128). The TDX architecture provides an ability of the processor 112 to deploy TDs 190A-190C that leverage the MK-TME engine 145, the MOT 160, and the access-controlled TD control structures (i.e., TDCS 124 and TDTCS 128) for secure operation of TD workloads 190A-190C.

In implementations of the disclosure, the TDRM 180 acts as a host and has full control of the cores 120 and other platform hardware. A TDRM 180 assigns software in a TD 190A-190C with logical processor(s). The TDRM 180, however, cannot access a TD's 190A-190C execution state on the assigned logical processor(s). Similarly, a TDRM 180 assigns physical memory and I/O resources to the TDs 190A-190C, but is not privy to access the memory state of a TD 190A due to separate encryption keys, and other integrity and replay controls on memory.

With respect to the separate encryption keys, the processor may utilize the MK-TME engine 145 to encrypt (and decrypt) memory used during execution. With total memory encryption (TME), any memory accesses by software executing on the core 120 can be encrypted in memory with an encryption key. MK-TME is an enhancement to TME that allows use of multiple encryption keys (the number of supported keys is implementation dependent). The processor 112 may utilize the MKTME engine 145 to cause different pages to be encrypted using different MK-TME keys. The MK-TME engine 145 may be utilized in the TD architecture described herein to support one or more encryption keys per each TD 190A-190C to help achieve the cryptographic isolation between different CSP customer workloads. For example, when MK-TME engine 145 is used in the TD architecture, the CPU enforces by default that TD (all pages) are to be encrypted using a TD-specific key. Furthermore, a TD may further choose specific TD pages to be plain text or encrypted using different ephemeral keys that are opaque to CSP software. The MK-TME engine 145 may include storage for the one or more keys. In some embodiments, there is at least one fuse keys on die.

Each TD 190A-190C is a software environment that supports a software stack consisting of VMMs (e.g., using virtual machine extensions (VMX)), OSes, and/or application software (hosted by the OS). Each TD 190A-190C operates independently of other TDs 190A-190C and uses logical processor(s), memory, and I/O assigned by the TDRM 180 on the platform. Software executing in a TD 190A-190C operates with reduced privileges so that the TDRM 180 can retain control of platform resources; however, the TDRM cannot affect the confidentiality or integrity of the TD 190A-190C under defined circumstances. Further details of the TD architecture and TDX are described in more detail below with reference to FIG. 1.

Implementations of the disclosure are not limited to computer systems. Alternative implementations of the disclosure can be used in other devices such as handheld devices and embedded applications. Some examples of handheld devices include cellular phones, Internet Protocol devices, digital cameras, personal digital assistants (PDAs), and handheld PCs. Embedded applications can include a micro controller, a digital signal processing device (DSP), system on a chip, network computers (NetPC), set-top boxes, network hubs, wide area network (WAN) switches, or any other system that can perform one or more instructions in accordance with at least one implementation.

One implementation may be described in the context of a single processing device desktop or server system, but alternative implementations may be included in a multiprocessing device system. Computing system 100 may be an example of a 'hub' system architecture. The computing system 100 includes a processor 112 to process data signals. The processor 112, as one illustrative example, includes a complex instruction set computer (CISC) micro-processing device, a reduced instruction set computing (RISC) micro-processing device, a very long instruction word (VLIW) micro-processing device, a processing device implementing a combination of instruction sets, or any other processing device, such as a digital signal processing device, for example. The processor 112 is coupled to a processing device bus that transmits data signals between the processor 112 and other components in the computing system 100, such as main memory 114 and/or secondary storage 118, storing instruction, data, or any combination thereof. The other components of the computing system 100 may include a graphics accelerator, a memory controller hub, an I/O controller hub, a wireless transceiver, a Flash BIOS, a network controller, an audio controller, a serial expansion port, an 1/0 controller, etc. These elements perform their conventional functions that are well known to those familiar with the art.

In one implementation, processor 112 includes a Level 1 (L1) internal cache memory. Depending on the architecture, the processor 112 may have a single internal cache or multiple levels of internal caches. Other implementations include a combination of both internal and external caches depending on the particular implementation and needs. A register file is to store different types of data in various registers including integer registers, floating point registers, vector registers, banked registers, shadow registers, checkpoint registers, status registers, configuration registers, and instruction pointer register.

It should be noted that the execution unit may or may not have a floating point unit. The processor 112, in one implementation, includes a microcode (ucode) ROM to store microcode, which when executed, is to perform algorithms for certain macroinstructions or handle complex scenarios. Here, microcode is potentially updateable to handle logic bugs/fixes for processor 112.

Alternate implementations of an execution unit may also be used in micro controllers, embedded processing devices, graphics devices, DSPs, and other types of logic circuits. System 100 includes a main memory 114 (may also be referred to as memory 114). Main memory 114 includes a DRAM device, a static random-access memory (SRAM) device, flash memory device, or other memory device. Main memory 114 stores instructions and/or data represented by data signals that are to be executed by the processor 112. The processor 112 is coupled to the main memory 114 via a processing device bus. A system logic chip, such as a memory controller hub (MCH) may be coupled to the processing device bus and main memory 114. An MCH can provide a high bandwidth memory path to main memory 114 for instruction and data storage and for storage of graphics commands, data and textures. The MCH can be used to direct data signals between the processor 112, main memory 114, and other components in the system 100 and to bridge the data signals between processing device bus, memory 114, and system 1/0, for example. The MCH may be coupled to memory 114 through a memory interface. In some implementations, the system logic chip can provide a graphics port for coupling to a graphics controller through an Accelerated Graphics Port (AGP) interconnect.

The computing system 100 may also include an I/O controller hub (ICH). The ICH can provide direct connections to some I/O devices via a local I/O bus. The local I/O bus is a highspeed I/O bus for connecting peripherals to the memory 114, chipset, and processor 112. Some examples are the audio controller, firmware hub (flash BIOS), wireless transceiver, data storage, legacy I/O controller containing user input and keyboard interfaces, a serial expansion port such as Universal Serial Bus (USB), and a network controller. The data storage device can comprise a hard disk drive, a floppy disk drive, a CD-ROM device, a flash memory device, or other mass storage device.

For another implementation of a system, the instructions executed by the processing device core 120 described above can be used with a system on a chip. One implementation of a system on a chip comprises of a processing device and a memory. The memory for one such system is a flash memory. The flash memory can be located on the same die as the processing device and other system components. Additionally, other logic blocks such as a memory controller or graphics controller can also be located on a system on a chip.

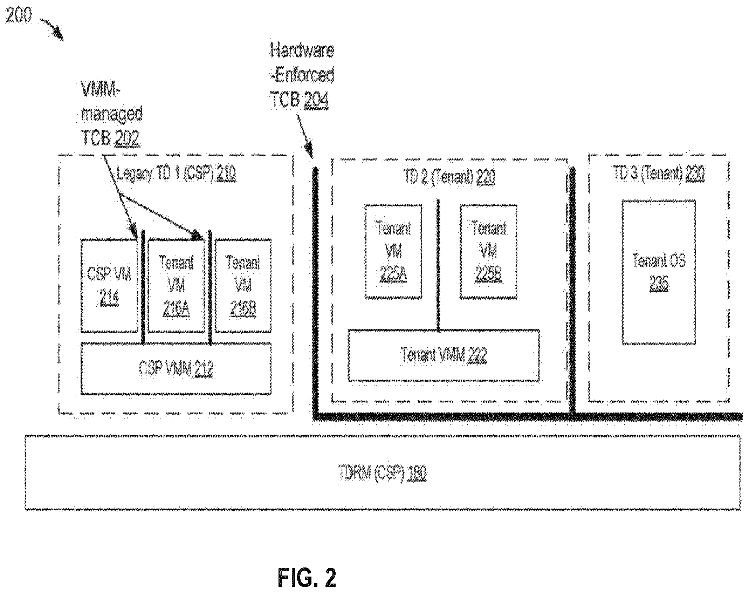

FIG. 2 is a block diagram depicting an example computing system implementing TD architecture 200 according to some embodiments. The TD architecture 200 supports two types of TDs. A first type of TD is a TD where the tenant trusts the CSP to enforce confidentiality and does not implement the TD architecture of implementations of the disclosure. This type of legacy TD is depicted as TD1 210. TD1 210 is a CSP TD having a CSP VMM-managed TCB 202. TD1 210 may include a CSP VMM 212 managing a CSP VM 214 and/or one or more tenant VMs 216A, 216B. In this case, the tenant VMs 216A, 216B are managed by the CSP VMM 212 that is in the VM's 216A, 216B TCB 202. In implementations of the disclosure, the tenant VMs 216A, 216B may still leverage memory encryption via TME or MK-TME in this model (described further below).

The other type of TD is where the tenant does not trust the CSP to enforce confidentiality and thus relies on the CPU with TD architecture of implementations of the disclosure. This type of TD is shown in two variants as TD2 220 and TD3 230. The TD2 220 is shown with a virtualization mode (such as VMX) being utilized by the tenant VMM (non-root) 222 running in TD2 220 to managed tenant VMs 225A, 225B. The TD3 230 does not include software using a virtualization mode, but instead runs an enlightened OS 235 in the TD3 230 directly. TD2 220 and TD3 230 are tenant TDs having a hardware-enforced TCB 204 as described in implementations of the disclosure. In one implementation, TD2 220 orTD3 230 may be the same as TD 190A described with respect to FIG. 1.

The TDRM 180 manages the life cycle of all three types of TDs 210, 220, 230, including allocation of resources. However, the TDRM 180 is not in the TCB for TD types TD2 220 and TD3 230. The TD architecture 200 does not place any architectural restrictions on the number or mix of TDs active on a system. However, software and certain hardware limitations in a specific implementation may limit the number of TDs running concurrently on a system due to other constraints.

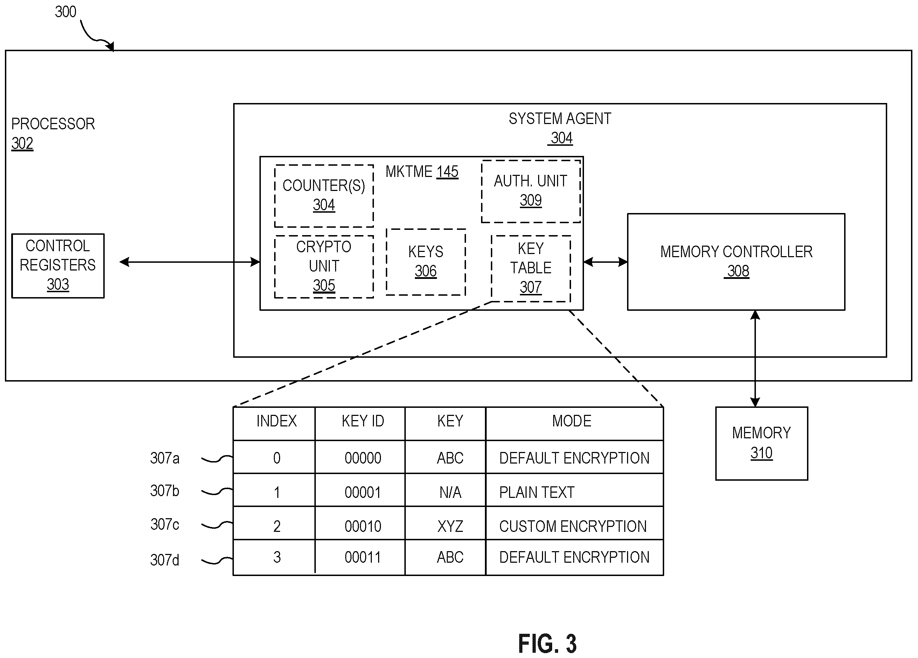

FIG. 3 illustrates embodiments using a multi-key cryptographic memory protection system 300. In the illustrated embodiment, memory protection system 300 includes processor 302, system agent 304, and memory 310. As described further below, memory protection system 300 provides cryptographic protection of data stored on memory 310.

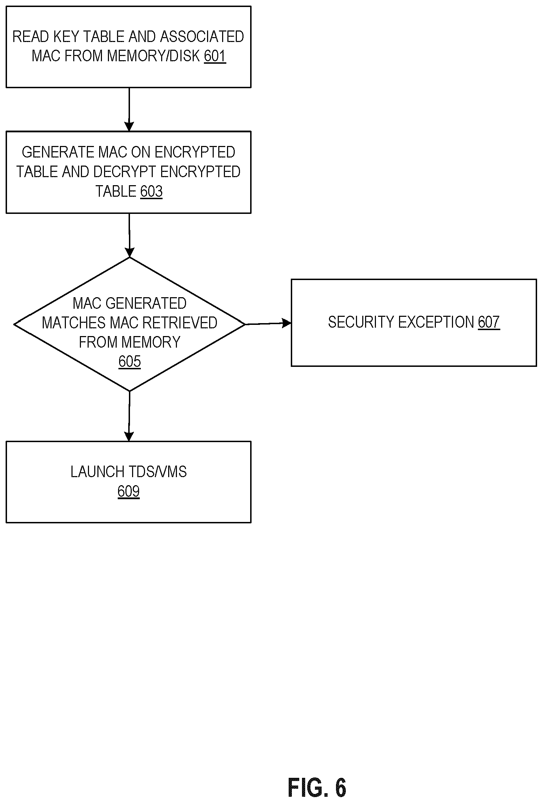

Processor 302 may be used to execute instructions, code, and/or any other form of logic or software, such as instructions associated with a software application. Processor 302 may include any combination of logic or processing elements operable to execute instructions, whether loaded from memory or implemented directly in hardware, such as a microprocessor, digital signal processor, field-programmable gate array (FPGA), graphics processing unit (GPU), programmable logic array (PLA), or application-specific integrated circuit (ASIC), among other examples. In some embodiments, for example, processor 302 and/or memory protection system 300 may be implemented using the computer architectures of FIGS 6 -10.

Memory 310 may be used to store information, such as code and/or data used by processor 302 during execution, and/or persistent data associated with an application or user of system 300. Memory 310 may include any type or combination of components capable of storing information, including volatile memory (e.g., random access memory (RAM), such as dynamic RAM (DRAM), synchronous dynamic RAM (SDRAM), and static RAM (SRAM)) and/or non-volatile memory (e.g., storage class memory (SCM), direct access storage (DAS) memory, non-volatile dual in-line memory modules (NVDIMM), and/or other forms of flash or solid-state storage).

System agent 304 may be used to provide various functions for processor 302, such as managing access to memory 310 and/or other resources of system 300. In the illustrated embodiment, for example, system agent 304 includes a memory controller 308 to control and/or manage access to memory 310 of system 300. Moreover, as described further below, system agent 304 also includes a MKTME engine 145 to protect data stored on memory 310. In some embodiments, system agent 304 may also provide an interface between processor 302 and other components of system 300 (e.g., using a direct media interface (DMI) and/or PCI-Express bridge). In various embodiments, system agent 304 may include any combination of logic elements configured to perform functionality of system agent 304 described herein, whether loaded from memory or other non-transitory computer readable medium, or implemented directly in hardware, including by way of non-limiting examples: a microprocessor, digital signal processor (DSP), field-programmable gate array (FPGA), graphics processing unit (GPU), programmable logic array (PLA), application-specific integrated circuit (ASIC), and/or virtual machine (VM) processor. System agent 304 may be integrated with processor 302, or alternatively, system agent 304 may be implemented on a separate chip communicatively coupled or connected to processor 302.

Memory controller 308 may be used to control and/or manage access to memory 310 of system 300. In various embodiments, memory controller 308 may be implemented using any combination of hardware and/or software logic, including a microprocessor, application-specific integrated circuit (ASIC), field-programmable gate array (FPGA), programmable logic array (PLA), virtual machine (VM), and/or any other type of circuitry or logic.

In the illustrated embodiment, system 300 provides cryptographic memory protection for memory 310. In some embodiments, for example, cryptographic memory protection may be implemented by extending and/or modifying a particular computer architecture. For example, cryptographic memory protection may be implemented by extending the functionality of a processor 302 and/or introducing a MKTME engine 145. In the illustrated embodiment, for example, processor 302 is extended to support control registers 303 and processor instruction(s) that can be used to enable and/or configure cryptographic memory protection, and MKTME engine 145 is implemented to provide the cryptographic memory protection. Although the illustrated example uses separate logical blocks to depict MKTME engine 145 and processor 302, in actual embodiments MKTME engine 145 and processor 302 may be integrated together or alternatively may be implemented as separate components. In various embodiments, for example, MKTME engine 145 may be implemented using any combination of hardware and/or software logic, including a microprocessor, application-specific integrated circuit (ASIC), field-programmable gate array (FPGA), programmable logic array (PLA), virtual machine (VM), and/or any other type of circuitry or logic.

MKTME engine 145 uses memory encryption to protect data stored on memory 310. In some embodiments, for example, MKTME engine 145 may be implemented on the memory path or memory bus to allow encryption of data transmitted to and from, and/or stored on, memory 310. Moreover, in some embodiments, MKTME engine 145 may be configurable or programmable, and may include support for multiple encryption keys. Accordingly, MKTME engine 145 may be configured or programmed (e.g., by software) to encrypt different regions or pages of memory 310 using different encryption keys and/or algorithms. In this manner, memory encryption can be provided and configured separately for different users, tenants, customers, applications, and/or workloads. In some embodiments, the MKTME engine 145 stores one or more keys 306.

For example, in some embodiments, MKTME engine 145 may be used to define various secured or protected domains that can be separately configured and protected using memory encryption. In some embodiments, for example, a "domain" may be viewed as a collection of resources associated with a particular workload (e.g., a workload of a particular user or application), and may include any regions of memory containing data associated with the workload. For example, a protected domain for a customer workload of a cloud service provider may include resources (e.g., memory) associated with an operating system (O/S), virtual machine (VM) (e.g., a VM running on a virtual machine manager (VMM)), and/or any ring-3 applications running on the O/S or VM. MKTME engine 145 may allow the protected domains to be configured and protected separately, thus allowing each protected domain to be cryptographically isolated in memory by encrypting its associated code and/or data with a unique encryption key. In this manner, the workloads of different users, customers, and/or tenants can be cryptographically isolated by defining different protection domains for the various workloads.

In some embodiments, the cryptographic memory protection of system 300 may be discovered and configured using processor instructions and/or hardware registers. For example, in some embodiments, a processor instruction may be used to determine whether cryptographic memory protection is supported by system 300, such as a CPU identification (CPUID) instruction used by software to identify the capabilities of a particular processor.

Upon determining that cryptographic memory protection is supported by system 300, the cryptographic memory protection may then be enabled and/or configured using hardware registers, such as control registers 303 of processor 302. For example, control registers 303 may include various model-specific registers (MSRs) that allow software to discover, enable, and/or configure the cryptographic memory protection capabilities of system 300. In some embodiments, for example, control registers 303 may include a memory encryption capability register, a memory encryption activation register, and/or one or more memory encryption exclusion registers, as described further below.

The memory encryption capability register (ME_CAPABILITY_MSR) may be used to allow software to discover the memory encryption capabilities of system 300. For example, software can read the ME_CAPABILITY_MSR (e.g., using a read MSR (RDMSR) instruction) to identify the supported encryption types and/or algorithms, the maximum number of encryption keys that can be used concurrently, and so forth. The table below illustrates an example embodiment of the memory encryption capability register (ME_CAPABILITY_MSR).

### Memory Encryption Capability Register (ME_CAPABILITY_MSR)

| FIELD | BIT INDEX | DESCRIPTION |
|---|---|---|
| SUPPORTED ENCRYPTION ALGORITHMS | 0:15 | This field is used to identify supported encryption algorithms or encryption types. |
| | | Each bit of this field (if used) corresponds to a particular encryption algorithm. For example, bit 0 may correspond to AES-XTS 128-bit encryption, bit 1 may correspond to AES-XTS 256-bit encryption, and so forth. A particular encryption algorithm is supported if the corresponding bit has a value of 1, and is unsupported if the corresponding bit has a value of 0. |
| RESERVED | 16:31 | These bits are unused and/or reserved (e.g., reserved for functionality extensions and/or other purposes). |
| MAX # OF KEY ID BITS (ME_MAX_KEYID_BITS) | 32:35 | This field is used to identify the maximum number of bits that can be used for KeylDentifiers. |
| | | More specifically, the value of this bit field represents the maximum number of higher order bits of a memory address that can be used as a key or domain identifier for memory encryption. |
| | | For example, if this field has a value of 8 (binary 1000), the higher order 8 bits of a memory address can be used as a KeylDentifier, thus supporting a total of 256 keys (2⁸ = 256). |
| | | Since this is a four-bit field, the maximum value is 15 (binary 1111), which allows support for up to ^{~}32k keys (2¹⁵ = 32,768). |
| | | The value of this field is 0 if multi-key memory encryption is not supported. |
| MAX # OF KEYS (ME_MAX_KEYS) | 36:50 | The value of this field represents the maximum number of encryption keys that can be used for memory encryption. This field can be used to specify a maximum number of keys that is less than the total number of supported keys (as specified by the ME_MAX_KEYID_BITS field above (bits 32:35)). |
| | | For example, if the above ME_MAX_KEYID_BITS field has a value of 8, the total number of supported keys is 256 (2⁸ = 256). However, if the present field (ME_MAX_KEYS) has a value of 300, then only 300 keys of the 256 total supported keys can be used. |
| | | The value of this field is 0 if multi-key memory encryption is not supported. |
| RESERVED | 51:63 | These bits are unused and/or reserved (e.g., reserved for functionality extensions and/or other purposes). |

The memory encryption activation register (ME_ACTIVATE_MSR) may be used to activate the cryptographic memory protection of system 300 (e.g., by setting the appropriate values in the register fields). The table below illustrates an example embodiment of the memory encryption activation register (ME_ACTIVATE_MSR).

### Memory Encryption Activation Register (ME_ACTIVATE_MSR)

| FIELD | BIT INDEX | DESCRIPTION |
|---|---|---|
| READ-ONLY LOCK | 0 | This field is used to activate a read-only lock on the memory encryption configuration registers after memory encryption has been activated. |
| | | For example, the lock may be activated after memory encryption has been activated through a write to the ME_ACTIVATE_MSR register (e.g., using a write MSR or WRMSR instruction). The lock can be enabled by setting this |
| | | bit field to 1, and the lock can be disabled by setting this bit field to 0. |
| | | The lock is applied to the ME_ACTIVATE_MSR, ME_EXCLUDE_BASE_MSR, and ME_EXCLUDE_MASK_MSR registers. Any writes to these registers will be ignored while the lock is active. |
| | | The lock is reset when the processor is reset. |
| ENABLE MEMORY ENCRYPTION | 1 | This field is used to enable or disable memory encryption. |
| | | Memory encryption is enabled when this bit field has a value of 1, and is disabled when this bit field has a value of 0. |
| KEY SELECTION FOR DEFAULT MODE | 2 | This field is used to select a key to be used for default encryption mode. Memory regions protected using default encryption mode, for example, are protected uniformly using a default encryption algorithm and key. |
| | | If this bit field is set to 0, a new key is created (e.g., after a cold or warm boot). |
| | | If this bit field is set to 1, an existing key is restored from storage (e.g., after resuming from standby). |
| SAVE KEY FOR STANDBY | 3 | This field is used to specify whether the key used for default encryption mode should be saved in order to allow the key to be restored after resuming from standby. |
| | | If this bit field is set to 1, the key is saved. If this bit field is set to 0, the key is not saved. |
| ENCRYPTION ALGORITHM FOR DEFAULT MODE | 4:7 | This field can be used to specify the encryption algorithm to use for default encryption mode. |
| | | The value of this field identifies the bit index in the ME_CAPABILITY_MSR register that corresponds to the selected encryption algorithm. |
| | | For example, the supported encryption algorithms are identified by bits 0:15 of the ME_CAPABILITY_MSR register. For example, bit index 0 of the ME_CAPABILITY_MSR register |
| | | may correspond to AES-XTS 128-bit encryption, bit index 1 may correspond to AES-XTS 256-bit encryption, and so forth. |
| | | If the present field has a value of 0 (binary 0000), the encryption algorithm corresponding to bit index 0 of the ME_CAPABILITY_MSR register is selected, which would be AES-XTS 128-bit encryption. |
| | | If the present field has a value of 1 (binary 0001), the encryption algorithm corresponding to bit index 1 of the ME_CAPABILITY_MSR register is selected, which would be AES-XTS 256-bit encryption. |
| | | The encryption algorithm selected using this field must be supported (e.g., its corresponding bit index in the ME_CAPABILITY_MSR register must be set to 1). |
| RESERVED | 8:31 | These bits are unused and/or reserved (e.g., reserved for functionality extensions and/or other purposes). |
| # OF KEY ID BITS (ME_KEYID_BITS) | 32:35 | This field is used to identify the number of bits that are used for KeylDentifiers. |
| | | More specifically, the value of this field represents the number of higher order bits of a memory address that are used as a key or domain identifier for memory encryption. |
| | | This field can be used to specify a number of bits for KeylDentifiers that is less than the maximum number of available bits for KeylDentifiers (as specified by the ME_MAX_KEYID_BITS field (bits 32:35) of the ME_CAPABILITY_MSR register). |
| | | For example, if the present field has a value of 8 (binary 1000), the higher order 8 bits of a memory address are used as the KeylDentifier, thus supporting a total of 256 keys (2⁸ = 256). |
| | | The value of this field is 0 if multi-key memory encryption is disabled. If multi-key memory encryption is disabled, but memory encryption in general is enabled (e.g., bit 1 of |
| | | ME_ACTIVATE_MSR is set), then only default encryption mode is enabled (and custom or multi-key encryption is disabled). |
| RESERVED | 36:47 | These bits are unused and/or reserved (e.g., reserved for functionality extensions and/or other purposes). |
| ENCRYPTION RESTRICTION BITMASK | 48:63 | This field can be used to restrict the encryption algorithms that can be used for multi-key encryption. |
| | | For example, the supported encryption algorithms are identified in the ME_CAPABILITY_MSR register (bits 0:15). The bits in the present field correspond to the bits of the ME_CAPABILITY_MSR register that are used to identify the supported encryption algorithms. In this manner, a supported encryption algorithm can be restricted from being used for multi-key encryption by clearing the corresponding bit in the present field (or alternatively, setting the corresponding bit). |

The memory encryption exclusion registers (ME_EXCLUDE_BASE_MSR and ME_EXCLUDE_MASK_MSR) may be used to exclude certain memory regions from the cryptographic memory protection provided by system 300. For example, in some embodiments, the exclusion registers may be used to identify a base memory address, and memory encryption may then be bypassed for memory addresses matching the base address (e.g., allowing the excluded or bypassed memory addresses to be accessed in plaintext mode).

The table below illustrates an example embodiment of the memory encryption exclusion mask register (ME_EXCLUDE_MASK_MSR), and the following table illustrates an example embodiment of the memory encryption exclusion base register (ME_EXCLUDE_BASE_MSR).

### Memory Encryption Exclusion Mask Register (ME_EXCLUDE_MASK_MSR)

| FIELD | BIT INDEX | DESCRIPTION |
|---|---|---|
| RESERVED | 0:10 | These bits are unused and/or reserved (e.g., reserved for functionality extensions and/or other purposes). |
| ENABLE EXCLUSION | 11 | This field can be used to enable or disable exclusions from memory encryption protection. |
| | | When this field is set to 0, no memory addresses are excluded from memory encryption protection. |
| | | When this field is set to 1, the ME_EXCLUDE_MASK_MSR and ME_EXCLUDE_BASE_MSR registers are used to define a memory range that is excluded from memory encryption protection. |
| EXCLUSION MASK | 12:(MAX ADDRESS SIZE-1) | This field is used to identify the bits of a memory address that must match the EXCLUSION BASE (defined in the ME_EXCLUDE_BASE_MSR register) in order to qualify as an excluded memory range. |
| | | For example, when accessing a particular memory address, the memory address can be AND-ed with the EXCLUSION MASK, and if the result matches the EXCLUSION BASE, memory encryption is bypassed for that memory address. |
| RESERVED | (MAX ADDRESS SIZE):63 | These bits are unused and/or reserved (e.g., reserved for functionality extensions and/or other purposes). |

### Memory Encryption Exclusion Base Register (ME_EXCLUDE_BASE_MSR)

| FIELD | BIT INDEX | DESCRIPTION |
|---|---|---|
| RESERVED | 0:11 | These bits are unused and/or reserved (e.g., reserved for functionality extensions and/or other purposes). |
| EXCLUSION BASE | 12:(MAX ADDRESS SIZE-1) | This field is used to identify the base memory address of a particular memory range to exclude from memory encryption protection. |
| RESERVED | (MAX ADDRESS SIZE):63 | These bits are unused and/or reserved (e.g., reserved for functionality extensions and/or other purposes). |

In the illustrated embodiment, MKTME engine 145 maintains an internal domain key table 307 to identify protected domains that have been configured in system 300. The key table 307 may be implemented using any form of memory or storage (e.g., RAM), and may also be implemented directly on MKTME engine 145, in memory 310, and/or using another memory component. Note that a "table" does not need to be used (other data structures may work), however, for ease of understanding a table is used in this description.

The MKTME engine 145 includes a cryptographic unit 305 to use, or construct a tweak to be used in encryption/decryption. The MKTME engine 145 is arranged to use the tweak and a common key set to decrypt data specified by the read request with the encrypted memory address. Here, the common key set is a single set of keys used by the without regard to which of several tenants or tenant workloads is being encrypted or decrypted. For example, workload data for a first tenant is encrypted using the same key from the common key set as workload data for a second tenant. The difference between the encryption of these workloads is in the tenant, or domain, specific tweaks created from the tenant specific keyid-nonces from KeylD registration. In an example, the decryption is accomplished by performing Advanced Encryption Standard (AES) XEX-based tweaked-codebook mode with ciphertext stealing (XTS) (AES-XTS) decryption, where the AES-XTS keys K1 and K2 are in the common key set (e.g., the same K1 and K2 are used for all tenant workloads) and the tweak is unique across mutually distrusting domains. The following represents the traditional multi-key AES-XTS technique:
T=AES (K2, Tweak)
PP=P XOR T
CC=AES (K1, PP)
C=CC XOR T

Where P is the plaintext, C is the ciphertext generated, and K1 and K2 are domain-specific keys. Thus, in this last example, K1 and K2 are from the common key set and not domain specific keys, but the tweak is specific to the domains.

A similar set of techniques as those described above to read encrypted data from memory (e.g., DRAM, 2LM, etc.) are used to encrypt data to store in memory. Thus, the system agent is arranged to receive a write request for the encrypted memory. Again, the write request includes the encrypted memory address. The system agent retrieves the KeyID-nonce from the key table 307 using the KeyID bits and constructs the tweak from the KeyID-nonce, the KeyID bits, and the physical address bits. The tweak, in conjunction with the common key set, are then used to encrypt data specified by the write request. The encrypted data may then be stored in the memory at the physical address in the encrypted memory address.

The entries 307a-d of domain key table 307 each correspond to a different protected domain. For example, each entry 307a-d includes a key or domain identifier (ID), a protection mode, and an associated encryption key (if applicable). In some embodiments, for example, a KeyID may represent the higher order bits of the memory addresses that are within the associated protected domain. For example, as discussed above, the ME_KEYID_BITS field of the ME_ACTIVATE_MSR register specifies the number of bits used for KeylDs. In the illustrated example, each KeylD in domain key table 307 is represented using 5 bits. Accordingly, the protected domain associated with a given KeylD covers all memory addresses whose highest order 5 bits match the KeyID. In the illustrated embodiment, the KeyID is stored as a field in key table 307, but in alternative embodiments, the KeyID may be used as an index into key table 307 rather than being stored directly in key table 307.

Moreover, in some embodiments, multiple protection modes may be supported, and each protected domain may be protected using a particular protection mode. For example, in some embodiments, the supported protection modes may include plaintext mode (e.g., unencrypted), standard or default encryption mode (e.g., encrypted using a standard or default encryption key), and/or custom encryption mode (e.g., encrypted using a unique encryption key). Accordingly, key table 307 may identify the protection mode associated with each protected domain or KeylD.

For example, in the illustrated example, domain key table 307 includes four entries. The first entry identifies a protected domain corresponding to KeyID 00000 (thus covering all memory addresses that contain 00000 in the highest order 5 bits), which is protected in default encryption mode using key "ABC." The second entry identifies a protected domain corresponding to KeyID 00001 (thus covering all memory addresses that contain 00001 in the highest order 5 bits), which is protected in plaintext mode and thus does not have an associated encryption key. The third entry identifies a protected domain corresponding to KeyID 00010 (thus covering all memory addresses that contain 00010 in the highest order 5 bits), which is protected in custom encryption mode using key "XYZ." The fourth entry identifies a protected domain corresponding to KeyID 00011 (thus covering all memory addresses that contain 00011 in the highest order 5 bits), which is protected in default encryption mode using key "ABC." As shown by these examples, the domain protected using custom encryption mode has a unique key ("XYZ"), the domains protected using default encryption mode share an encryption key

("ABC"), and the domain protected in plaintext mode is unencrypted and thus has no associated key.

In some embodiments, protected domains may be defined and/or configured using a processor instruction implemented by processor 302, such as the "platform configuration" (PCONFIG) instruction. The PCONFIG instruction, for example, may be used to define and/or configure a protected domain by programming a new entry-or modifying an existing entry-in key table 307 of MKTME engine 145. In this manner, protected domains can be defined and configured programmatically (e.g., by management software) using the PCONFIG instruction.

Client machines may require the use of low power states in order to enhance battery life. Exemplary states may include a suspend (S3) state where the memory is put in self-refresh but a core loses power along with the chipset and a hibernate (S4) state where the core, chipset, and memory lose power. There may be additional power states supported as well where different parts of the platform lose power. To support TDX on client machines, the keys associated with TDs must be saved when the MKTME engine 145 loses power on these power states.

As noted, the MKTME engine 145 maintains a key table which stores the information for each key identifier or KeyID. The KeyID is carried in the most significant bits of the physical address and is used to identify the key to be used for the memory accesses belonging to the KeyID. Each TD is assigned a KeyID and associated key before its launch by the VMM/TDX Module with the key never made visible to the VMM to ensure that TD data cannot be read/modified by the VMM.

For TDs, in some embodiments, the only mode used is encrypt with KeylD key to ensure TD code and data is generated encrypted (note it can also be encrypt with integrity protect or any other cryptographic mode such as encrypt with hardware replay protection). However, TDs are not the only entities running on the system. The VMM can create encrypted VMs which are VMs using their own keys under VMM control. In other words, for these VMs, the VMM is not out of the trust boundary

System software gets a notification on low power state entry and can take clean up actions to preserve state before entering the low power state to allow resume from the low power state without impact to applications. As an example, across S3/S4, the applications that were running retain their state and continue to execute from where they left off. However, for TDX, the VMM is not in the TCB and does not have any control over the keys of TDs. The key programming interface through PCONFIG instruction does not provide a read out of the key table for security reasons. To allow the key state to be read out and restored securely, the two instructions are detailed herein (KTABLESAVE and KTABLERESTORE). The execution of a KTABLESAVE instruction causes a return of the key table in an encrypted, integrity, and replay protected state in a memory location specified by the instruction. The execution of a KTABLERESTORE instruction causes a blob of data, to be decrypted and verified in its integrity, and restored the state in the memory encryption engine 145

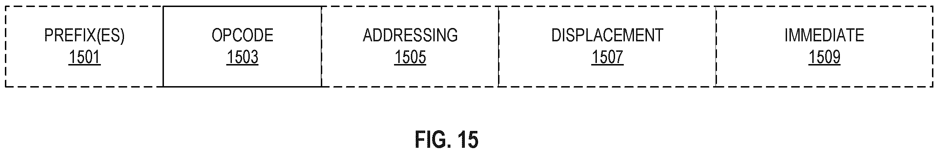

An embodiment of a format for an KTABLESAVE instruction is KTABLESAVE DST. In some embodiments, KTABLESAVE is the opcode mnemonic of the instruction. The opcode is stored in at least field 1503 of the exemplary format of FIG. 15. DST is a destination operand which may be a register or a memory location. The destination is typically provided using addressing field(s) 1505. For example, REG field 1644 or R/M field 1646 may be used to identify a particular register and/or provide memory addressing information.

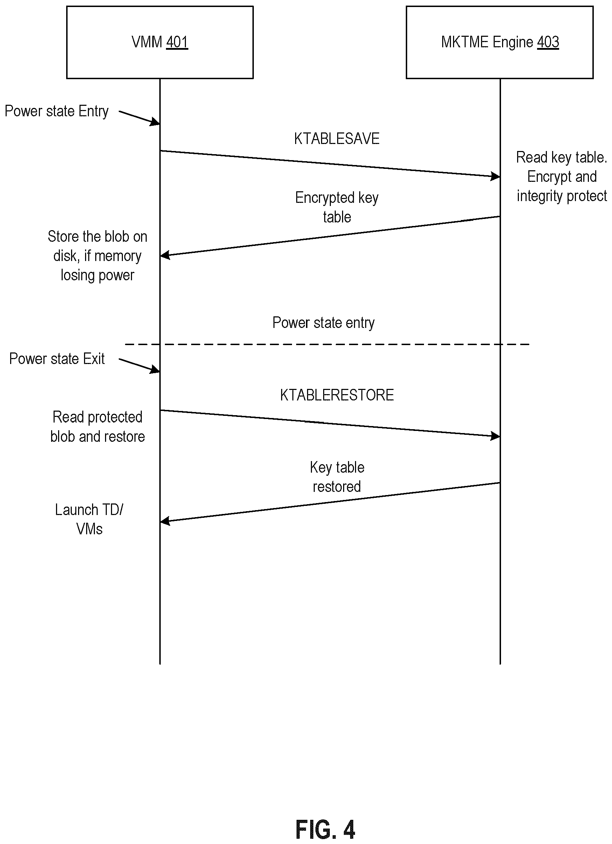

FIG. 4 illustrates embodiments of a high-level flow for key table save/restore. In particular, a key table save/restore is called by a VMM 401 without resulting in key exposure. On receiving a power entry event, the VMM 401 uses a KTABLESAVE instruction to receive a protected key table from the MKTME engine 403.

The execution of the KTABLESAVE instruction causes a key table of the MKTME engine 403 to be read, encrypted, and integrity protected. In some embodiments, the KTABLESAVE instruction is executed in a traditional core setting and causes the MKTME engine 403 to read its key table, encrypt and integrity protect it (for example, using a fuse key dedicated for this usage). In some embodiments, the KTABLESAVE instruction is executed on the MKTME engine 403.

The protected key table is returned at a memory location specified by the VMM in the KTABLESAVE instruction as a blob. For power states where memory retains power, the protected key table can reside in memory until the power state is exited. For power states where memory also loses power (e.g., hibernates), the blob is further read by the VMM 401 and stored on disk. On a power state exit event, the VMM 401 retrieves the encrypted key table either from memory or from the disk, decrypts it, and provides the decrypted key table to be restored upon an execution of a KTABLERESTORE instruction. This instruction either causes the MKTME engine 403 to recover the key table state or is passed to the MKTME engine 403 for execution. Once restored, the VMM 401 is ready to restore the VM/TDs that were suspend on power state entry.

While a VMM gets the events for power state entry and exit, the VMM is typically not trusted with the keys and hence cannot be allowed to directly read the key table from MKTME hardware. The key table hence needs to be protected before being handed over to the VMM. In some embodiments, the key table needs one or more of the following security properties: 1) confidentiality (the keys cannot be returned back in plaintext and hence, the key table needs to be encrypted); 2) integrity (the key table has keys and encryption mode and a modification of either can result in security issues (e.g., setting the mode to no encrypt for a TD)); and/or 3) replay protection (the key table should be replay protected to ensure that key table is always restored to the state it was in before the power event).

To meet the security requirements, the in some embodiments, a key stored in fuses is used to be used for the various protections. The key can be further protected by a physical unclonable function (PUF) key to provide hardening against hardware attacks. The fuses can reside in a core 120 or in the MKTME engine 145 which acts as the root of trust for the platform. In some embodiments, the MKTME engine 145 utilizes AES-GCM for providing the properties above. The key table is read and encrypted and a message authentication code (MAC) is generated on the contents by the MKTME engine 145. In addition to this, in some embodiments, a running counter 304 is used as an input to the MAC construction. This counter is incremented on every power save event and stored in non-volatile storage (e.g., flash in the MKTME 145). Storing the counter on-die ensures that untrusted software cannot point to old, protected key tables across power states and cause the key table to be restored incorrectly resulting in security issues.

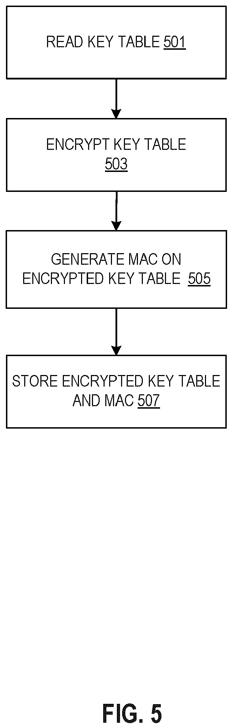

FIG. 5 illustrates embodiments of a flow for operations performed during execution of a KTABLESAVE instruction. At 501, the key table is read from the MKTME. The read key table is encrypted using a key (e.g., using a fuse key by the cryptographic unit 305) at 503.

A MAC for the encrypted key table is generated by the MKTME at 505 (for example, by the cryptographic unit 305). In some embodiments, an on-die counter is used as an additional input into the cryptographic unit 305 to generate the MAC. At 507, the MAC and encrypted key table are stored at the address provided by the destination operand of the KTABLESAVE instruction.

FIG. 6 illustrates embodiments of a flow for operations performed during execution of a KTABLERESTORE instruction. At 601, the encrypted key table and MAC are read from a memory location indicated by a source of the KTABLERESTORE instruction.

A MAC for the encrypted key table is generated by the MKTME (for example, by the cryptographic unit 305) and the encrypted key table is decrypted using a key (e.g., using a fuse key by the cryptographic unit 305) at 603. In some embodiments, an on-die counter is used as an additional input into the cryptographic unit 305 to generate the MAC.

At 605, a comparison of the read MAC and the generated MAC is made. When the MACs do not match, a security exception is raised at 607. In some embodiments, this exception causes TDs and/or VMs to not launch. When the MACs match, TDs and/or VMs are allowed to launch. When the key table blob has been modified by the VMM or any other software (or even by an adversary with physical access), it will be detected as an integrity failure even in the case where the protected key table was replayed from an older power state entry.

In some embodiments, some of the operations detailed are performed by microcode itself. In some embodiments, microcode implementing the instructions instructs the security engine to perform some of the operations. In the latter case, firmware on the security engine could cause the operations above.

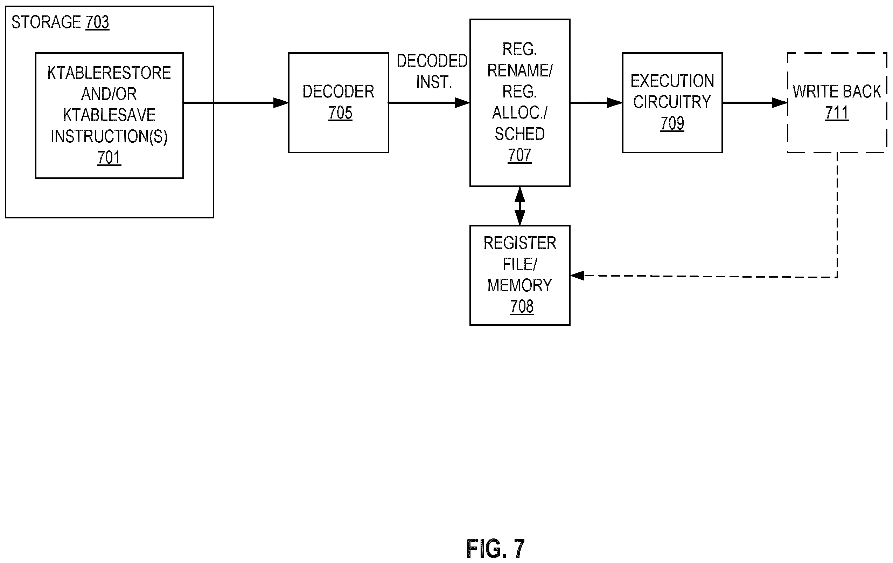

FIG. 7 illustrates embodiments of hardware to process an instruction such as KTABLERESTORE and KTABLESAVE instructions. As illustrated, storage 703 stores a one or more KTABLERESTORE and KTABLESAVE instruction 701 to be executed.

The instruction 701 is received by decode circuitry 705. For example, the decode circuitry 705 receives this instruction from fetch logic/circuitry.

More detailed embodiments of at least one instruction format will be detailed later. The decode circuitry 705 decodes the instruction into one or more operations. In some embodiments, this decoding includes generating a plurality of micro-operations to be performed by execution circuitry (such as execution circuitry 709). The decode circuitry 705 also decodes instruction prefixes.

In some embodiments, register renaming, register allocation, and/or scheduling circuitry 707 provides functionality for one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

Registers (register file) and/or memory 708 store data as operands of the instruction to be operated on by execution circuitry 709. Exemplary register types include packed data registers, general purpose registers, and floating-point registers.

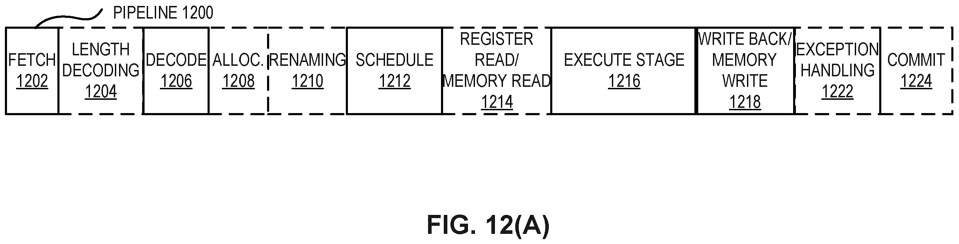

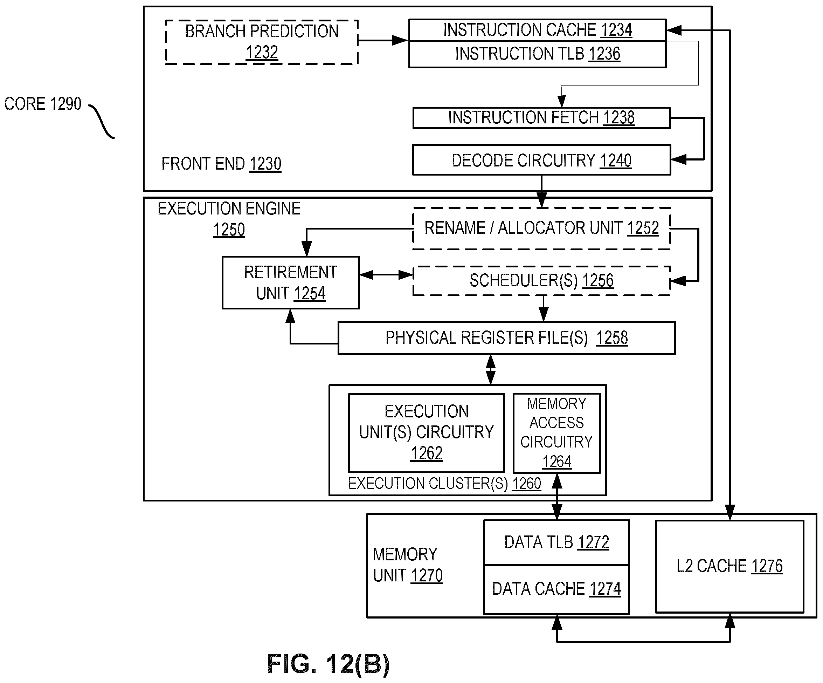

Execution circuitry 709 executes the decoded instruction. Exemplary detailed execution circuitry is shown in FIGS. 4, 12, etc. In some embodiments, the execution of the decoded KTABLERESTORE instruction causes the execution circuitry to read an encrypted key data structure and associated mac from a source address, decrypt contents of the read key data structure, generate a mac on at least the decrypted, read key data structure, determine when the generated mac matches the read mac, wherein when the macs do not match an exception is generated and when the macs do match the key data structure is restored in an cryptographic engine, and generate and store operational status in an identified destination operand location.

In some embodiments, the execution of the decoded KTABLESAVE instruction causes the execution circuitry to read a key data structure, encrypt contents of the read key data structure, generate a MAC on at least the encrypted, read key data structure, store the mac and encrypted, read key data structure at a destination address.

In some embodiments, retirement/write back circuitry 711 architecturally commits the destination register into the registers or memory 708 and retires the instruction.

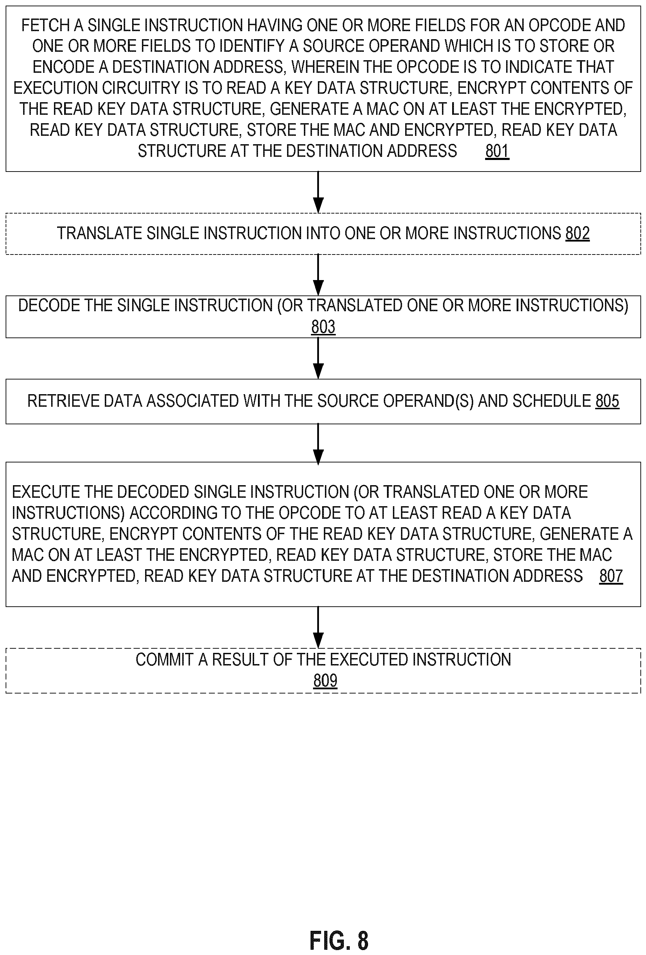

FIG. 8 illustrates an embodiment of method performed by a processor to process a KTABLESAVE instruction. For example, a processor core as shown in FIG. 12(B), a pipeline as detailed below, etc. performs this method.

At 801, an instruction is fetched. For example, a single KTABLESAVE instruction is fetched. The instruction includes fields for an opcode and one or more fields to identify a source operand which is to store or encode a destination address, wherein the opcode is to indicate that execution circuitry is to read a key data structure, encrypt contents of the read key data structure, generate a MAC on at least the encrypted, read key data structure, store the MAC and encrypted, read key data structure at the destination address. In some embodiments, the source operand is a register storing a memory address. In other embodiments, the source operand is a memory location.

In some embodiments, the single instruction is translated into one or more instructions at 802. These one or more instructions may be of a different instruction set architecture.

The fetched instruction (or translated one or more instructions) is/are decoded at 803. For example, the fetched arithmetic recurrence instruction is decoded by decode circuitry such as that detailed herein.

Data values associated with the source operands of the decoded instruction are retrieved at 805. For example, when one or more of the source operands are memory operands, the data from the indicated memory location is retrieved.

At 807, the decoded instruction is executed by execution circuitry (hardware) such as that detailed herein. For the KTABLESAVE instruction, the execution will cause execution circuitry to at least read a key data structure, encrypt contents of the read key data structure, generate a mac on at least the encrypted, read key data structure, store the mac and encrypted, read key data structure at the destination address. In some embodiments, this execution is performed by the MKTME. In other embodiments, execution circuitry of a core is to cause a MKTME to perform these acts. In some embodiments, the MAC is generated using input that includes a counter value.

In some embodiments, the instruction is committed or retired at 809.

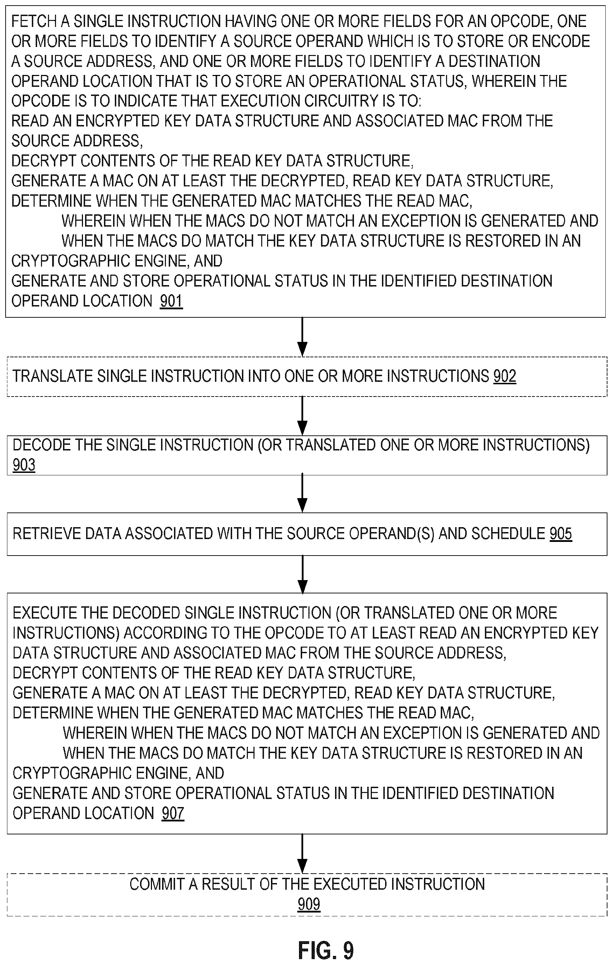

FIG. 9 illustrates an embodiment of method performed by a processor to process a KTABLERESTORE instruction. For example, a processor core as shown in FIG. 12(B), a pipeline as detailed below, etc. performs this method.

At 901, an instruction is fetched. For example, a single KTABLERESTORE instruction is fetched. The instruction includes fields for an opcode and one or more fields to identify a source operand which is to store or encode a source address, and one or more fields to identify a destination operand location that is to store an operational status, wherein the opcode is to indicate that execution circuitry is to: read an encrypted key data structure and associated MAC from the source address, decrypt contents of the read key data structure, generate a mac on at least the decrypted, read key data structure, determine when the generated MAC matches the read MAC, wherein when the MACs do not match an exception is generated and when the MACs do match the key data structure is restored in an cryptographic engine, and generate and store operational status in the identified destination operand location. In some embodiments, the source operand is a register storing a memory address. In other embodiments, the source operand is a memory location. In some embodiments, the destination operand is a register. In some embodiments, status is one of success or failure.

In some embodiments, the single instruction is translated into one or more instructions at 902. These one or more instructions may be of a different instruction set architecture.

The fetched instruction (or translated one or more instructions) is/are decoded at 903. For example, the fetched arithmetic recurrence instruction is decoded by decode circuitry such as that detailed herein.

Data values associated with the source operands of the decoded instruction are retrieved at 905. For example, when one or more of the source operands are memory operands, the data from the indicated memory location is retrieved.

At 907, the decoded instruction is executed by execution circuitry (hardware) such as that detailed herein. For the KTABLERESTORE instruction, the execution will cause execution circuitry to at least read an encrypted key data structure and associated mac from the source address, encrypt contents of the read key data structure, generate a mac on at least the decrypted, read key data structure, determine when the generated mac matches the read mac, wherein when the macs do not match an exception is generated and when the macs do match the key data structure is restored in an cryptographic engine, and generate and store operational status in the identified destination operand location. In some embodiments, the MAC is generated using input that includes a counter value.

In some embodiments, the instruction is committed or retired at 909.

Embodiments detailed above may be utilized in many different architectures and systems. Detailed below are examples of exemplary architectures, systems, processors, etc.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

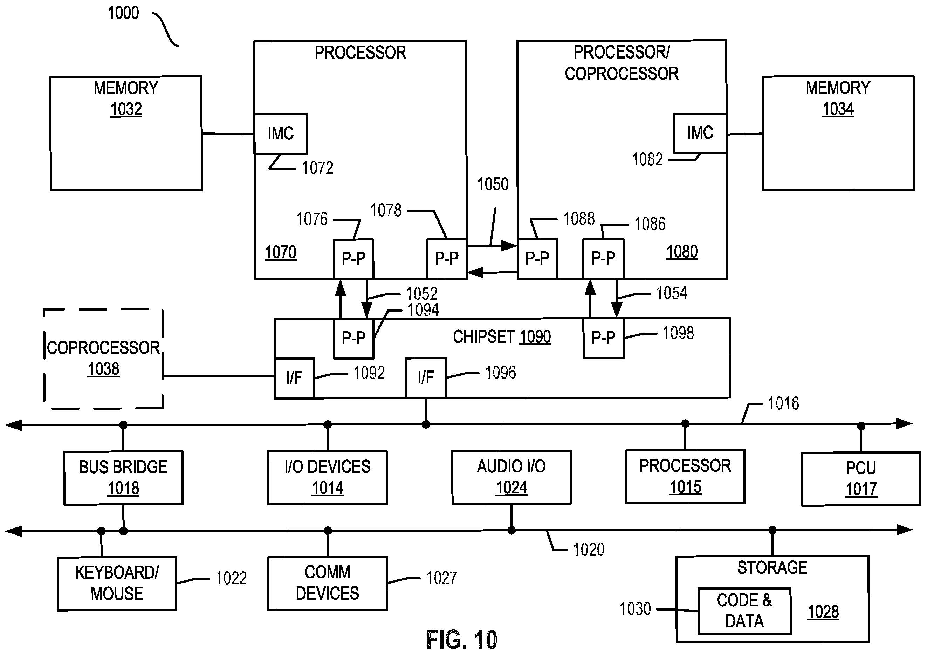

FIG. 10 illustrates embodiments of an exemplary system. Multiprocessor system 1000 is a point-to-point interconnect system and includes a plurality of processors including a first processor 1070 and a second processor 1080 coupled via a point-to-point interconnect 1050. In some embodiments, the first processor 1070 and the second processor 1080 are homogeneous. In some embodiments, first processor 1070 and the second processor 1080 are heterogenous.

Processors 1070 and 1080 are shown including integrated memory controller (IMC) units circuitry 1072 and 1082, respectively. Processor 1070 also includes as part of its interconnect controller units point-to-point (P-P) interfaces 1076 and 1078; similarly, second processor 1080 includes P-P interfaces 1086 and 1088. Processors 1070, 1080 may exchange information via the point-to-point (P-P) interconnect 1050 using P-P interface circuits 1078, 1088. IMCs 1072 and 1082 couple the processors 1070, 1080 to respective memories, namely a memory 1032 and a memory 1034, which may be portions of main memory locally attached to the respective processors.

Processors 1070, 1080 may each exchange information with a chipset 1090 via individual P-P interconnects 1052, 1054 using point to point interface circuits 1076, 1094, 1086, 1098. Chipset 1090 may optionally exchange information with a coprocessor 1038 via a high-performance interface 1092. In some embodiments, the coprocessor 1038 is a special-purpose processor, such as, for example, a high-throughput MIC processor, a network or communication processor, compression engine, graphics processor, GPGPU, embedded processor, or the like.

A shared cache (not shown) may be included in either processor 1070, 1080 or outside of both processors, yet connected with the processors via P-P interconnect, such that either or both processors' local cache information may be stored in the shared cache if a processor is placed into a low power mode.

Chipset 1090 may be coupled to a first interconnect 1016 via an interface 1096. In some embodiments, first interconnect 1016 may be a Peripheral Component Interconnect (PCI) interconnect, or an interconnect such as a PCI Express interconnect or another I/O interconnect. In some embodiments, one of the interconnects couples to a power control unit (PCU) 1017, which may include circuitry, software, and/or firmware to perform power management operations with regard to the processors 1070, 1080 and/or co-processor 1038. PCU 1017 provides control information to a voltage regulator to cause the voltage regulator to generate the appropriate regulated voltage. PCU 1017 also provides control information to control the operating voltage generated. In various embodiments, PCU 1017 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1017 is illustrated as being present as logic separate from the processor 1070 and/or processor 1080. In other cases, PCU 1017 may execute on a given one or more of cores (not shown) of processor 1070 or 1080. In some cases, PCU 1017 may be implemented as a microcontroller (dedicated or general-purpose) or other control logic configured to execute its own dedicated power management code, sometimes referred to as P-code. In yet other embodiments, power management operations to be performed by PCU 1017 may be implemented externally to a processor, such as by way of a separate power management integrated circuit (PMIC) or another component external to the processor. In yet other embodiments, power management operations to be performed by PCU 1017 may be implemented within BIOS or other system software.

Various I/O devices 1014 may be coupled to first interconnect 1016, along with an interconnect (bus) bridge 1018 which couples first interconnect 1016 to a second interconnect 1020. In some embodiments, one or more additional processor(s) 1015, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 1016. In some embodiments, second interconnect 1020 may be a low pin count (LPC) interconnect. Various devices may be coupled to second interconnect 1020 including, for example, a keyboard and/or mouse 1022, communication devices 1027 and a storage unit circuitry 1028. Storage unit circuitry 1028 may be a disk drive or other mass storage device which may include instructions/code and data 1030, in some embodiments. Further, an audio I/O 1024 may be coupled to second interconnect 1020. Note that other architectures than the point-to-point architecture described above are possible. For example, instead of the point-to-point architecture, a system such as multiprocessor system 1000 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

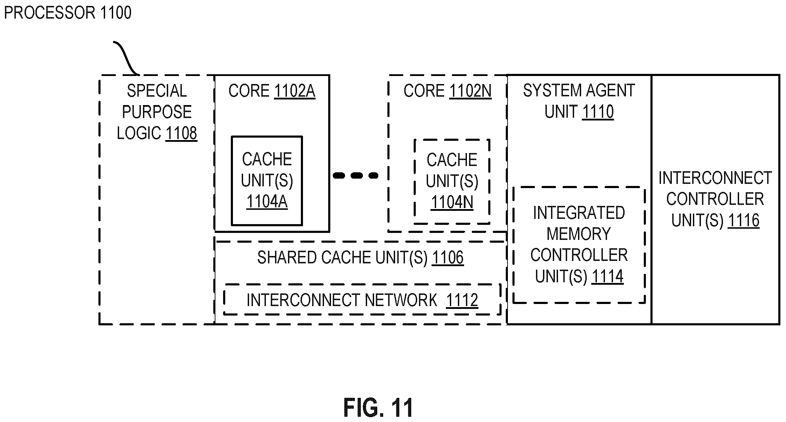

FIG. 11 illustrates a block diagram of embodiments of a processor 1100 that may have more than one core, may have an integrated memory controller, and may have integrated graphics. The solid lined boxes illustrate a processor 1100 with a single core 1102A, a system agent 1110, a set of one or more interconnect controller units circuitry 1116, while the optional addition of the dashed lined boxes illustrates an alternative processor 1100 with multiple cores 1102(A)-(N), a set of one or more integrated memory controller unit(s) circuitry 1114 in the system agent unit circuitry 1110, and special purpose logic 1108, as well as a set of one or more interconnect controller units circuitry 1116. Note that the processor 1100 may be one of the processors 1070 or 1080, or co-processor 1038 or 1015 of FIG. 10.

Thus, different implementations of the processor 1100 may include: 1) a CPU with the special purpose logic 1108 being integrated graphics and/or scientific (throughput) logic (which may include one or more cores, not shown), and the cores 1102(A)-(N) being one or more general purpose cores (e.g., general purpose in-order cores, general purpose out-of-order cores, or a combination of the two); 2) a coprocessor with the cores 1102(A)-(N) being a large number of special purpose cores intended primarily for graphics and/or scientific (throughput); and 3) a coprocessor with the cores 1102(A)-(N) being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

A memory hierarchy includes one or more levels of cache unit(s) circuitry 1104(A)-(N) within the cores 1102(A)-(N), a set of one or more shared cache units circuitry 1106, and external memory (not shown) coupled to the set of integrated memory controller units circuitry 1114. The set of one or more shared cache units circuitry 1106 may include one or more mid-level caches, such as level 2 (L2), level 3 (L3), level 4 (L4), or other levels of cache, such as a last level cache (LLC), and/or combinations thereof. While in some embodiments ring- based interconnect network circuitry 1112 interconnects the special purpose logic 1108 (e.g., integrated graphics logic), the set of shared cache units circuitry 1106, and the system agent unit circuitry 1110, alternative embodiments use any number of well-known techniques for interconnecting such units. In some embodiments, coherency is maintained between one or more of the shared cache units circuitry 1106 and cores 1102(A)-(N).

In some embodiments, one or more of the cores 1102(A)-(N) are capable of multi-threading. The system agent unit circuitry 1110 includes those components coordinating and operating cores 1102(A)-(N). The system agent unit circuitry 1110 may include, for example, power control unit (PCU) circuitry and/or display unit circuitry (not shown). The PCU may be or may include logic and components needed for regulating the power state of the cores 1102(A)-(N) and/or the special purpose logic 1108 (e.g., integrated graphics logic). The display unit circuitry is for driving one or more externally connected displays.

The cores 1102(A)-(N) may be homogenous or heterogeneous in terms of architecture instruction set; that is, two or more of the cores 1102(A)-(N) may be capable of executing the same instruction set, while other cores may be capable of executing only a subset of that instruction set or a different instruction set.

### Exemplary Core Architectures

### In-order and out-of-order core block diagram

FIG. 12(A) is a block diagram illustrating both an exemplary in-order pipeline and an exemplary register renaming, out-of-order issue/execution pipeline according to embodiments of the invention. FIG. 12(B) is a block diagram illustrating both an exemplary embodiment of an in-order architecture core and an exemplary register renaming, out-of-order issue/execution architecture core to be included in a processor according to embodiments of the invention. The solid lined boxes in FIGS. 12(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 12(A), a processor pipeline 1200 includes a fetch stage 1202, an optional length decode stage 1204, a decode stage 1206, an optional allocation stage 1208, an optional renaming stage 1210, a scheduling (also known as a dispatch or issue) stage 1212, an optional register read/memory read stage 1214, an execute stage 1216, a write back/memory write stage 1218, an optional exception handling stage 1222, and an optional commit stage 1224. One or more operations can be performed in each of these processor pipeline stages. For example, during the fetch stage 1202, one or more instructions are fetched from instruction memory, during the decode stage 1206, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 1206 and the register read/memory read stage 1214 may be combined into one pipeline stage. In one embodiment, during the execute stage 1216, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 1200 as follows: 1) the instruction fetch 1238 performs the fetch and length decoding stages 1202 and 1204; 2) the decode unit circuitry 1240 performs the decode stage 1206; 3) the rename/allocator unit circuitry 1252 performs the allocation stage 1208 and renaming stage 1210; 4) the scheduler unit(s) circuitry 1256 performs the schedule stage 1212; 5) the physical register file(s) unit(s) circuitry 1258 and the memory unit circuitry 1270 perform the register read/memory read stage 1214; the execution cluster 1260 perform the execute stage 1216; 6) the memory unit circuitry 1270 and the physical register file(s) unit(s) circuitry 1258 perform the write back/memory write stage 1218; 7) various units (unit circuitry) may be involved in the exception handling stage 1222; and 8) the retirement unit circuitry 1254 and the physical register file(s) unit(s) circuitry 1258 perform the commit stage 1224.

FIG. 12(B) shows processor core 1290 including front-end unit circuitry 1230 coupled to an execution engine unit circuitry 1250, and both are coupled to a memory unit circuitry 1270. The core 1290 may be a reduced instruction set computing (RISC) core, a complex instruction set computing (CISC) core, a very long instruction word (VLIW) core, or a hybrid or alternative core type. As yet another option, the core 1290 may be a special-purpose core, such as, for example, a network or communication core, compression engine, coprocessor core, general purpose computing graphics processing unit (GPGPU) core, graphics core, or the like.

The front end unit circuitry 1230 may include branch prediction unit circuitry 1232 coupled to an instruction cache unit circuitry 1234, which is coupled to an instruction translation lookaside buffer (TLB) 1236, which is coupled to instruction fetch unit circuitry 1238, which is coupled to decode unit circuitry 1240. In one embodiment, the instruction cache unit circuitry 1234 is included in the memory unit circuitry 1270 rather than the front-end unit circuitry 1230. The decode unit circuitry 1240 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 1240 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 1240 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1290 includes a microcode ROM (not shown) or other medium that stores microcode for certain macroinstructions (e.g., in decode unit circuitry 1240 or otherwise within the front end unit circuitry 1230). In one embodiment, the decode unit circuitry 1240 includes a micro-operation (micro-op) or operation cache (not shown) to hold/cache decoded operations, micro-tags, or micro-operations generated during the decode or other stages of the processor pipeline 1200. The decode unit circuitry 1240 may be coupled to rename/allocator unit circuitry 1252 in the execution engine unit circuitry 1250.

The execution engine circuitry 1250 includes the rename/allocator unit circuitry 1252 coupled to a retirement unit circuitry 1254 and a set of one or more scheduler(s) circuitry 1256. The scheduler(s) circuitry 1256 represents any number of different schedulers, including reservations stations, central instruction window, etc. In some embodiments, the scheduler(s) circuitry 1256 can include arithmetic logic unit (ALU) scheduler/scheduling circuitry, ALU queues, arithmetic generation unit (AGU) scheduler/scheduling circuitry, AGU queues, etc. The scheduler(s) circuitry 1256 is coupled to the physical register file(s) circuitry 1258. Each of the physical register file(s) circuitry 1258 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 1258 includes vector registers unit circuitry, writemask registers unit circuitry, and scalar register unit circuitry. These register units may provide architectural vector registers, vector mask registers, general-purpose registers, etc. The physical register file(s) unit(s) circuitry 1258 is overlapped by the retirement unit circuitry 1254 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1254 and the physical register file(s) circuitry 1258 are coupled to the execution cluster(s) 1260. The execution cluster(s) 1260 includes a set of one or more execution units circuitry 1262 and a set of one or more memory access circuitry 1264. The execution units circuitry 1262 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 1256, physical register file(s) unit(s) circuitry 1258, and execution cluster(s) 1260 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 1264). It should also be understood that where separate pipelines are used, one or more of these pipelines may be out-of-order issue/execution and the rest in-order.

In some embodiments, the execution engine unit circuitry 1250 may perform load store unit (LSU) address/data pipelining to an Advanced Microcontroller Bus (AHB) interface (not shown), and address phase and writeback, data phase load, store, and branches.

The set of memory access circuitry 1264 is coupled to the memory unit circuitry 1270, which includes data TLB unit circuitry 1272 coupled to a data cache circuitry 1274 coupled to a level 2 (L2) cache circuitry 1276. In one exemplary embodiment, the memory access units circuitry 1264 may include a load unit circuitry, a store address unit circuit, and a store data unit circuitry, each of which is coupled to the data TLB circuitry 1272 in the memory unit circuitry 1270. The instruction cache circuitry 1234 is further coupled to a level 2 (L2) cache unit circuitry 1276 in the memory unit circuitry 1270. In one embodiment, the instruction cache 1234 and the data cache 1274 are combined into a single instruction and data cache (not shown) in L2 cache unit circuitry 1276, a level 3 (L3) cache unit circuitry (not shown), and/or main memory. The L2 cache unit circuitry 1276 is coupled to one or more other levels of cache and eventually to a main memory.

The core 1290 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 1290 includes logic to support a packed data instruction set extension (e.g., AVX1, AVX2), thereby allowing the operations used by many multimedia applications to be performed using packed data.

### Exemplary Execution Unit(s) Circuitry

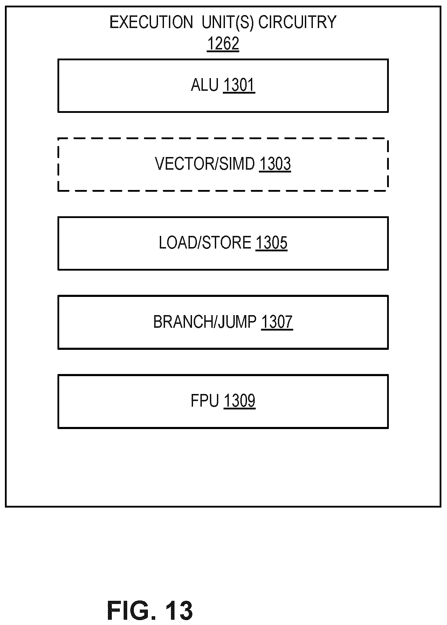

FIG. 13 illustrates embodiments of execution unit(s) circuitry, such as execution unit(s) circuitry 1262 of FIG. 12(B). As illustrated, execution unit(s) circuity 1262 may include one or more ALU circuits 1301, vector/SIMD unit circuits 1303, load/store unit circuits 1305, and/or branch/jump unit circuits 1307. ALU circuits 1301 perform integer arithmetic and/or Boolean operations. Vector/SIMD unit circuits 1303 perform vector/SIMD operations on packed data (such as SIMD/vector registers). Load/store unit circuits 1305 execute load and store instructions to load data from memory into registers or store from registers to memory. Load/store unit circuits 1305 may also generate addresses. Branch/jump unit circuits 1307 cause a branch or jump to a memory address depending on the instruction. Floating-point unit (FPU) circuits 1309 perform floating-point arithmetic. The width of the execution unit(s) circuitry 1262 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

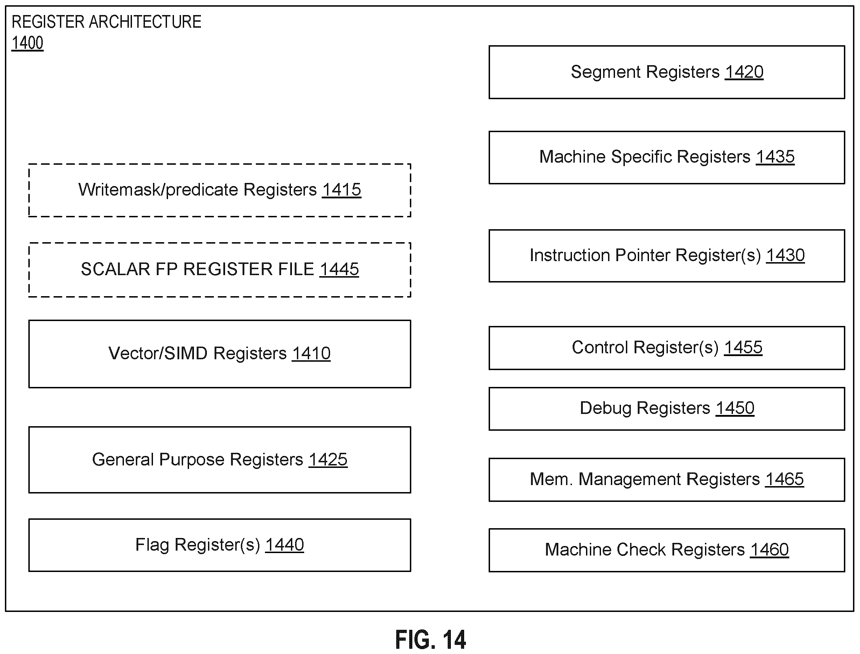

FIG. 14 is a block diagram of a register architecture 1400 according to some embodiments. As illustrated, there are vector/SIMD registers 1410 that vary from 128-bit to 1,024 bits width. In some embodiments, the vector/SIMD registers 1410 are physically 512-bits and, depending upon the mapping, only some of the lower bits are used. For example, in some embodiments, the vector/SIMD registers 1410 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 1400 includes writemask/predicate registers 1415. For example, in some embodiments, there are 8 writemask/predicate registers (sometimes called k0 through k7) that are each 16-bit, 32-bit, 64-bit, or 128-bit in size. Writemask/predicate registers 1415 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 1415 corresponds to a data element position of the destination. In other embodiments, the writemask/predicate registers 1415 are scalable and consists of a set number of enable bits for a given vector element (e.g., 8 enable bits per 64-bit vector element).

The register architecture 1400 includes a plurality of general-purpose registers 1425. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 1400 includes scalar floating-point register 1445 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 1440 (e.g., EFLAGS, RFLAGS, etc.) store status and control information for arithmetic, compare, and system operations. For example, the one or more flag registers 1440 may store condition code information such as carry, parity, auxiliary carry, zero, sign, and overflow. In some embodiments, the one or more flag registers 1440 are called program status and control registers.

Segment registers 1420 contain segment points for use in accessing memory. In some embodiments, these registers are referenced by the names CS, DS, SS, ES, FS, and GS.

Machine specific registers (MSRs) 1435 control and report on processor performance. Most MSRs 1435 handle system- related functions and are not accessible to an application program. Machine check registers 1460 consist of control, status, and error reporting MSRs that are used to detect and report on hardware errors.

One or more instruction pointer register(s) 1430 store an instruction pointer value. Control register(s) 1455 (e.g., CR0-CR4) determine the operating mode of a processor (e.g., processor 1070, 1080, 1038, 1015, and/or 1100) and the characteristics of a currently executing task. Debug registers 1450 control and allow for the monitoring of a processor or core's debugging operations.

Memory management registers 1465 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

FIG. 15 illustrates embodiments of an instruction format. As illustrated, an instruction may include multiple components including, but not limited to, one or more fields for: one or more prefixes 1501, an opcode 1503, addressing information 1505 (e.g., register identifiers, memory addressing information, etc.), a displacement value 1507, and/or an immediate 1509. Note that some instructions utilize some or all of the fields of the format whereas others may only use the field for the opcode 1503. In some embodiments, the order illustrated is the order in which these fields are to be encoded, however, it should be appreciated that in other embodiments these fields may be encoded in a different order, combined, etc.

The prefix(es) field(s) 1501, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1503 is used to at least partially define the operation to be performed upon a decoding of the instruction. In some embodiments, a primary opcode encoded in the opcode field 1503 is 1, 2, or 3 bytes in length. In other embodiments, a primary opcode can be a different length. An additional 3-bit opcode field is sometimes encoded in another field.

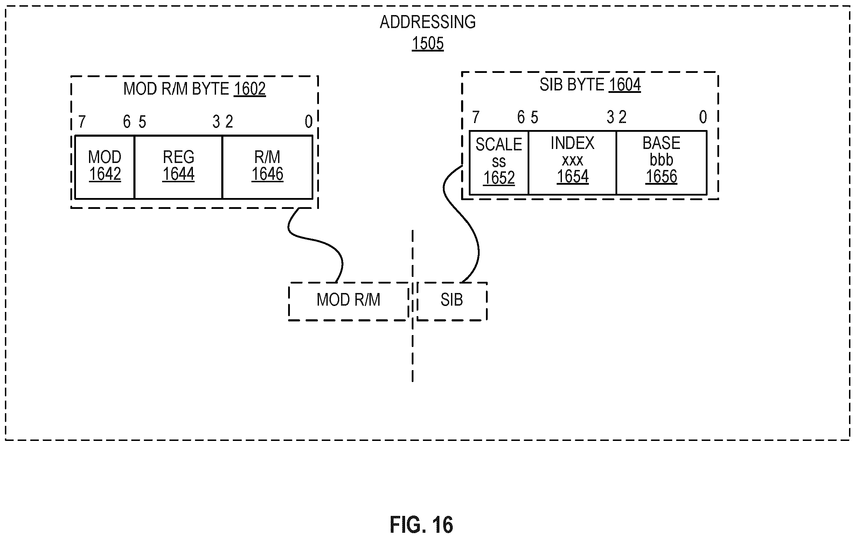

The addressing field 1505 is used to address one or more operands of the instruction, such as a location in memory or one or more registers. FIG. 16 illustrates embodiments of the addressing field 1505. In this illustration, an optional ModR/M byte 1602 and an optional Scale, Index, Base (SIB) byte 1604 are shown. The ModR/M byte 1602 and the SIB byte 1604 are used to encode up to two operands of an instruction, each of which is a direct register or effective memory address. Note that each of these fields are optional in that not all instructions include one or more of these fields. The MOD R/M byte 1602 includes a MOD field 1642, a register field 1644, and R/M field 1646.

The content of the MOD field 1642 distinguishes between memory access and non-memory access modes. In some embodiments, when the MOD field 1642 has a value of b11, a register-direct addressing mode is utilized, and otherwise register-indirect addressing is used.

The register field 1644 may encode either the destination register operand or a source register operand, or may encode an opcode extension and not be used to encode any instruction operand. The content of register index field 1644, directly or through address generation, specifies the locations of a source or destination operand (either in a register or in memory). In some embodiments, the register field 1644 is supplemented with an additional bit from a prefix (e.g., prefix 1501) to allow for greater addressing.

The R/M field 1646 may be used to encode an instruction operand that references a memory address, or may be used to encode either the destination register operand or a source register operand. Note the R/M field 1646 may be combined with the MOD field 1642 to dictate an addressing mode in some embodiments.

The SIB byte 1604 includes a scale field 1652, an index field 1654, and a base field 1656 to be used in the generation of an address. The scale field 1652 indicates scaling factor. The index field 1654 specifies an index register to use. In some embodiments, the index field 1654 is supplemented with an additional bit from a prefix (e.g., prefix 1501) to allow for greater addressing. The base field 1656 specifies a base register to use. In some embodiments, the base field 1656 is supplemented with an additional bit from a prefix (e.g., prefix 1501) to allow for greater addressing. In practice, the content of the scale field 1652 allows for the scaling of the content of the index field 1654 for memory address generation (e.g., for address generation that uses 2^{scale} * index + base).

Some addressing forms utilize a displacement value to generate a memory address. For example, a memory address may be generated according to 2^{scale} * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 1507 provides this value. Additionally, in some embodiments, a displacement factor usage is encoded in the MOD field of the addressing field 1505 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 1507.

In some embodiments, an immediate field 1509 specifies an immediate for the instruction. An immediate may be encoded as a 1-byte value, a 2-byte value, a 4-byte value, etc.

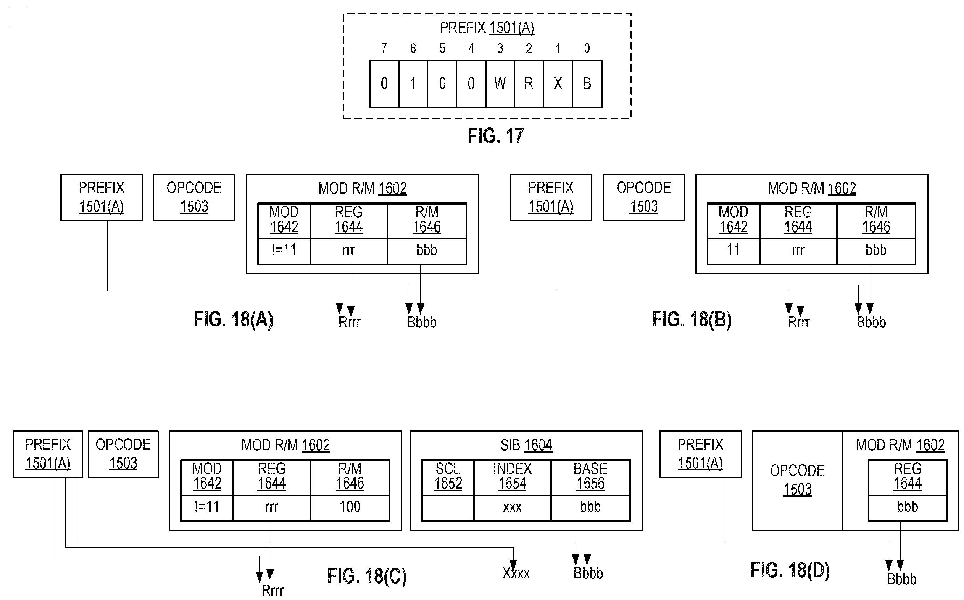

FIG. 17 illustrates embodiments of a first prefix 1501(A). In some embodiments, the first prefix 1501(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1501(A) may specify up to three registers using 3-bit fields depending on the format: 1) using the reg field 1644 and the R/M field 1646 of the Mod R/M byte 1602; 2) using the Mod R/M byte 1602 with the SIB byte 1604 including using the reg field 1644 and the base field 1656 and index field 1654; or 3) using the register field of an opcode.

In the first prefix 1501(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1644 and MOD R/M R/M field 1646 alone can each only address 8 registers.

In the first prefix 1501(A), bit position 2 (R) may an extension of the MOD R/M reg field 1644 and may be used to modify the ModR/M reg field 1644 when that field encodes a general purpose register, a 64-bit packed data register (e.g., a SSE register), or a control or debug register. R is ignored when Mod R/M byte 1602 specifies other registers or defines an extended opcode.

Bit position 1 (X) X bit may modify the SIB byte index field 1654.

Bit position B (B) B may modify the base in the Mod R/M R/M field 1646 or the SIB byte base field 1656; or it may modify the opcode register field used for accessing general purpose registers (e.g., general purpose registers 1425).

FIGS. 18(A)-(D) illustrate embodiments of how the R, X, and B fields of the first prefix 1501(A) are used. FIG. 18(A) illustrates R and B from the first prefix 1501(A) being used to extend the reg field 1644 and R/M field 1646 of the MOD R/M byte 1602 when the SIB byte 1604 is not used for memory addressing. FIG. 18(B) illustrates R and B from the first prefix 1501(A) being used to extend the reg field 1644 and R/M field 1646 of the MOD R/M byte 1602 when the SIB byte 16 04 is not used (register-register addressing). FIG. 18(C) illustrates R, X, and B from the first prefix 1501(A) being used to extend the reg field 1644 of the MOD R/M byte 1602 and the index field 1654 and base field 1656 when the SIB byte 1604 being used for memory addressing. FIG. 18(D) illustrates B from the first prefix 1501(A) being used to extend the reg field 1644 of the MOD R/M byte 1602 when a register is encoded in the opcode 1503.

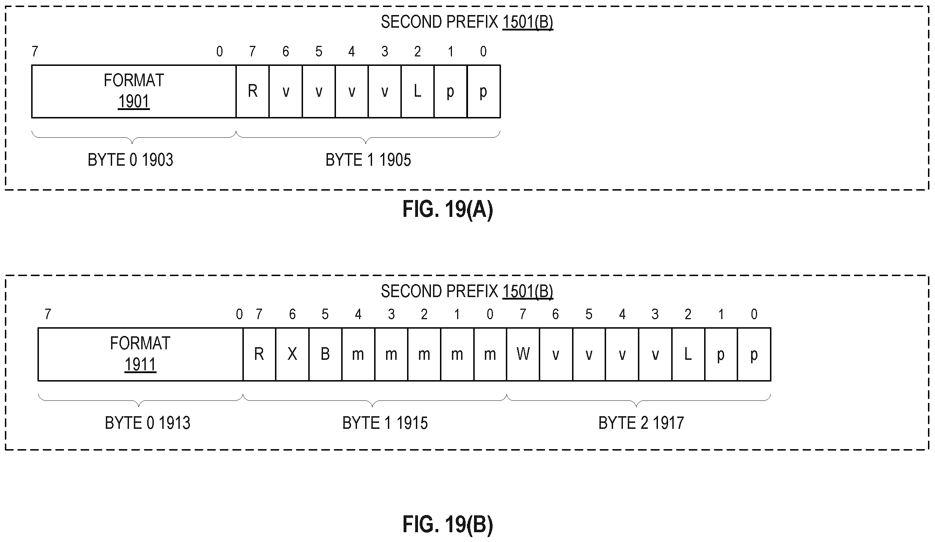

FIGS. 19(A)-(B) illustrate embodiments of a second prefix 1501(B). In some embodiments, the second prefix 1501(B) is an embodiment of a VEX prefix. The second prefix 1501(B) encoding allows instructions to have more than two operands, and allows SIMD vector registers (e.g., vector/SIMD registers 1410) to be longer than 64-bits (e.g., 128-bit and 256-bit). The use of the second prefix 1501(B) provides for three-operand (or more) syntax. For example, previous two-operand instructions performed operations such as A = A + B, which overwrites a source operand. The use of the second prefix 1501(B) enables operands to perform nondestructive operations such as A = B + C.

In some embodiments, the second prefix 1501(B) comes in two forms - a two-byte form and a three-byte form. The two-byte second prefix 1501(B) is used mainly for 128-bit, scalar, and some 256-bit instructions; while the three-byte second prefix 1501(B) provides a compact replacement of the first prefix 1501(A) and 3-byte opcode instructions.

FIG. 19(A) illustrates embodiments of a two-byte form of the second prefix 1501(B). In one example, a format field 1901 (byte 0 1903) contains the value C5H. In one example, byte 1 1905 includes a "R" value in bit[7]. This value is the complement of the same value of the first prefix 1501(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1646 to encode the instruction operand that references a memory address or encode either the destination register operand or a source register operand.

Instructions that use this prefix may use the Mod R/M reg field 1644 to encode either the destination register operand or a source register operand, be treated as an opcode extension and not used to encode any instruction operand.

For instruction syntax that support four operands, vvvv, the Mod R/M R/M field 1646 and the Mod R/M reg field 1644 encode three of the four operands. Bits[7:4] of the immediate 1509 are then used to encode the third source register operand.

FIG. 19(B) illustrates embodiments of a three-byte form of the second prefix 1501(B). in one example, a format field 1911 (byte 0 1913) contains the value C4H. Byte 11915 includes in bits[7:5] "R," "X," and "B" which are the complements of the same values of the first prefix 1501(A). Bits[4:0] of byte 11915 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1917 is used similar to W of the first prefix 1501(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1646 to encode the instruction operand that references a memory address or encode either the destination register operand or a source register operand.

Instructions that use this prefix may use the Mod R/M reg field 1644 to encode either the destination register operand or a source register operand, be treated as an opcode extension and not used to encode any instruction operand.

For instruction syntax that support four operands, vvvv, the Mod R/M R/M field 1646, and the Mod R/M reg field 1644 encode three of the four operands. Bits[7:4] of the immediate 1509 are then used to encode the third source register operand.

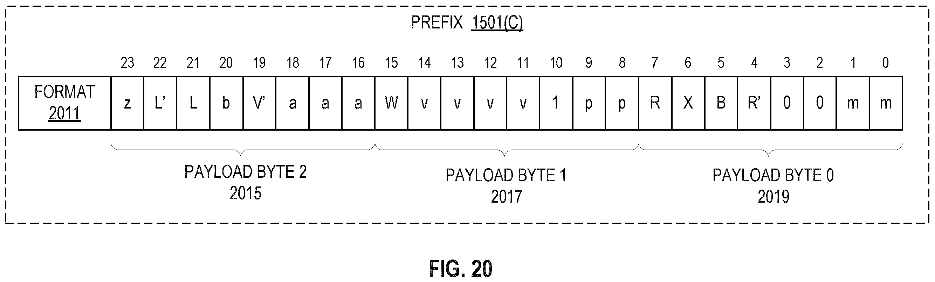

FIG. 20 illustrates embodiments of a third prefix 1501(C). In some embodiments, the first prefix 1501(A) is an embodiment of an EVEX prefix. The third prefix 1501(C) is a four-byte prefix.

The third prefix 1501(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 14) or predication utilize this prefix. Opmask register allow for conditional processing or selection control. Opmask instructions, whose source/destination operands are opmask registers and treat the content of an opmask register as a single value, are encoded using the second prefix 1501(B).

The third prefix 1501(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1501(C) is a format field 2011 that has a value, in one example, of 62H. Subsequent bytes are referred to as payload bytes 2015-2019 and collectively form a 24-bit value of P[23:0] providing specific capability in the form of one or more fields (detailed herein).

In some embodiments, P[1:0] of payload byte 2019 are identical to the low two mmmmm bits. P[3:2] are reserved in some embodiments. Bit P[4] (R') allows access to the high 16 vector register set when combined with P[7] and the ModR/M reg field 1644. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 1644 and ModR/M R/M field 1646. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1501(A) and second prefix 1511(B) and may serve as an opcode extension bit or operand size promotion.

P[18:16] specify the index of a register in the opmask (writemask) registers (e.g., writemask/predicate registers 1415). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 1501(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | ModR/M reg | GPR, Vector | Destination or Source |
| VVVV | V' | vvvv | | GPR, Vector | 2nd Source or Destination |
| RM | X | B | ModR/M R/M | GPR, Vector | 1st Source or Destination |
| BASE | 0 | B | ModR/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | ModR/M reg | GPR, Vector | Destination or Source |
| VVVV | vvvv | GPR, Vector | 2^{nd} Source or Destination |
| RM | ModR/M R/M | GPR, Vector | 1^{st} Source or Destination |
| BASE | ModR/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | ModR/M Reg | k0-k7 | Source |
| VVVV | vvvv | k0-k7 | 2^{nd} Source |
| RM | ModR/M R/M | k0-7 | 1^{st} Source |
| {k1] | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

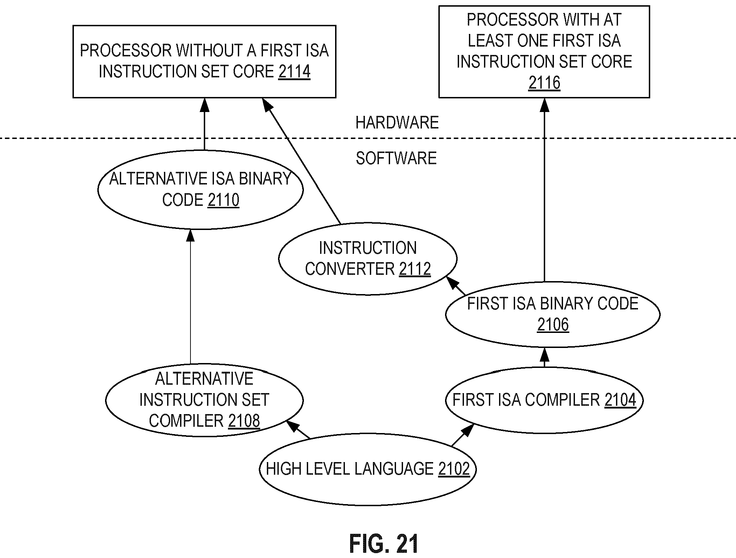

FIG. 21 illustrates a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 21 shows a program in a high level language 2102 may be compiled using a first ISA compiler 2104 to generate first ISA binary code 2106 that may be natively executed by a processor with at least one first instruction set core 2116. The processor with at least one first ISA instruction set core 2116 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 2104 represents a compiler that is operable to generate first ISA binary code 2106 (e.g., object code) that can, with or without additional linkage processing, be executed on the processor with at least one first ISA instruction set core 2116. Similarly, FIG. 21 shows the program in the high level language 2102 may be compiled using an alternative instruction set compiler 2108 to generate alternative instruction set binary code 2110 that may be natively executed by a processor without a first ISA instruction set core 2114. The instruction converter 2112 is used to convert the first ISA binary code 2106 into code that may be natively executed by the processor without a first ISA instruction set core 2114. This converted code is not likely to be the same as the alternative instruction set binary code 2110 because an instruction converter capable of this is difficult to make; however, the converted code will accomplish the general operation and be made up of instructions from the alternative instruction set. Thus, the instruction converter 2112 represents software, firmware, hardware, or a combination thereof that, through emulation, simulation or any other process, allows a processor or other electronic device that does not have a first ISA instruction set processor or core to execute the first ISA binary code 2106.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment requires at least one of A, at least one of B, or at least one of C to each be present.

## Claims

1. An apparatus comprising:
decoder circuitry (1240) to decode a single instruction, the single instruction to include one or more fields for an opcode (1503) and one or more fields to identify a source operand which is to store or encode a destination address, wherein the opcode is to indicate that execution circuitry (1240) is to read a key data structure of a memory encryption engine (145), encrypt contents of the read key data structure, generate a message authentication code ,MAC, on at least the encrypted, read key data structure, store the MAC and encrypted, read key data structure at the destination address; and
execution circuitry (1240) to execute the decoded instruction according to the opcode (1503).

2. The apparatus of claim 1, wherein the field for the identifier of the source operand is to identify a vector register to store the destination address.

3. The apparatus of claim 1, wherein the field for the identifier of the source operand is to identify a memory location to store the destination address.

4. The apparatus of any of claims 1-3, wherein entries of the key data structure include an encryption key identifier and a mode for use of a key.

5. The apparatus of any of claims 1-4, wherein entries of the key data structure are further to include an encryption key.

6. A method comprising:
decoding a single instruction, the single instruction to include one or more fields for an opcode (1503) and one or more fields to identify a source operand which is to store or encode a destination address, wherein the opcode is to indicate that execution circuitry is to read a key data structure of a memory encryption engine (145), encrypt contents of the read key data structure, generate a message authentication code ,MAC on at least the encrypted, read key data structure, store the MAC and encrypted, read key data structure at the destination address; and
executing the decoded instruction according to the opcode (1503).

7. The method of claim 6, wherein the field for the identifier of the source operand is to identify a vector register to store the destination address.

8. The method of claim 6, wherein the field for the identifier of the source operand is to identify a memory location to store the destination address.

9. The method of any of claims 6-8, wherein entries of the key data structure include an encryption key identifier and a mode for use of a key.

10. The method of any of claims 6-9, wherein entries of the key data structure are further to include an encryption key.

11. The method of any of claims 6-10, further comprising translating the single instruction into one or more instructions of a different instruction set architecture prior to decoding, wherein executing of the one or more instructions of the different instruction set architecture is to be functionally equivalent as the executing according to the opcode of the single instruction.

## Patentansprüche

1. Vorrichtung, die Folgendes umfasst:
eine Decoderschaltungsanordnung (1240), um eine einzelne Anweisung zu decodieren, wobei die einzelne Anweisung ein oder mehrere Felder für einen Opcode (1503) und ein oder mehrere Felder, um einen Quelloperanden zu identifizieren, um eine Zieladresse zu speichern oder zu codieren, enthalten soll, wobei der Opcode angeben soll, dass eine Ausführungsschaltungsanordnung (1240) eine Schlüsseldatenstruktur einer Speicherverschlüsselungsmaschine (145) lesen soll, Inhalte der gelesenen Schlüsseldatenstruktur verschlüsseln soll, einen Nachrichtenauthentifizierungscode, MAC, auf zumindest der verschlüsselten, gelesenen Schlüsseldatenstruktur erzeugen soll und den MAC und die verschlüsselte, gelesene Schlüsseldatenstruktur an der Zieladresse speichern soll; und
eine Ausführungsschaltungsanordnung (1240), um die decodierte Anweisung gemäß dem Opcode (1503) auszuführen.

2. Vorrichtung nach Anspruch 1, wobei das Feld für die Kennung des Quelloperanden ein Vektorregister identifizieren soll, um die Zieladresse zu speichern.

3. Vorrichtung nach Anspruch 1, wobei das Feld für die Kennung des Quelloperanden einen Speicherort identifizieren soll, um die Zieladresse zu speichern.

4. Vorrichtung nach einem der Ansprüche 1-3, wobei Einträge der Schlüsseldatenstruktur eine Verschlüsselungsschlüsselkennung und eine Betriebsart für die Verwendung eines Schlüssels enthalten.

5. Vorrichtung nach einem der Ansprüche 1-4, wobei Einträge der Schlüsseldatenstruktur ferner einen Verschlüsselungsschlüssel enthalten sollen.

6. Verfahren, das Folgendes umfasst:
Decodieren einer einzelnen Anweisung, wobei die einzelne Anweisung ein oder mehrere Felder für einen Opcode (1503) und ein oder mehrere Felder, um einen Quelloperanden zu identifizieren, der eine Zieladresse speichern oder codieren soll, enthalten soll, wobei der Opcode angeben soll, dass eine Ausführungsschaltungsanordnung eine Schlüsseldatenstruktur einer Speicherverschlüsselungsmaschine (145) lesen soll, Inhalte der gelesenen Schlüsseldatenstruktur verschlüsseln soll, einen Nachrichtenauthentifizierungscode, MAC, auf zumindest der verschlüsselten, gelesenen Schlüsseldatenstruktur erzeugen soll und den MAC und die verschlüsselte, gelesene Schlüsseldatenstruktur an der Zieladresse speichern soll; und
Ausführen der decodierten Anweisung gemäß dem Opcode (1503).

7. Verfahren nach Anspruch 6, wobei das Feld für die Kennung des Quelloperanden ein Vektorregister identifizieren soll, um die Zieladresse zu speichern.

8. Verfahren nach Anspruch 6, wobei das Feld für die Kennung des Quelloperanden einen Speicherort identifizieren soll, um die Zieladresse zu speichern.

9. Verfahren nach einem der Ansprüche 6-8, wobei Einträge der Schlüsseldatenstruktur eine Verschlüsselungsschlüsselkennung und eine Betriebsart für die Verwendung eines Schlüssels enthalten.

10. Verfahren nach einem der Ansprüche 6-9, wobei Einträge der Schlüsseldatenstruktur ferner einen Verschlüsselungsschlüssel enthalten sollen.

11. Verfahren nach einem der Ansprüche 6-10, das ferner umfasst, die einzelne Anweisung in eine oder mehrere Anweisungen einer anderen Anweisungsgruppenarchitektur vor dem Decodieren zu übersetzen,
wobei das Ausführen der einen oder der mehreren Anweisungen der anderen Anweisungsgruppenarchitektur funktional gleich der Ausführung gemäß dem Opcode der einzelnen Anweisung sein soll.

## Revendications

1. Appareil comprenant :
des circuits de décodage (1240) pour décoder une instruction unique, l'instruction unique devant inclure un ou plusieurs champs pour un code d'opération (1503) et un ou plusieurs champs pour identifier un opérande source qui doit stocker ou coder une adresse de destination, où le code d'opération doit indiquer que les circuits d'exécution (1240) doivent lire une structure de données de clé d'un moteur de chiffrement de mémoire (145), chiffrer le contenu de la structure de données de clé lue, générer un code d'authentification de message, MAC, sur au moins la structure de données de clé lue chiffrée, stocker le MAC et la structure de données de clé lue chiffrée à l'adresse de destination ; et
des circuits d'exécution (1240) destinés à exécuter l'instruction décodée en fonction du code d'opération (1503).

2. Appareil selon la revendication 1, dans lequel le champ de l'identificateur de l'opérande source sert à identifier un registre vectoriel pour stocker l'adresse de destination.

3. Appareil selon la revendication 1, dans lequel le champ de l'identificateur de l'opérande source sert à identifier un emplacement de mémoire pour stocker l'adresse de destination.

4. Appareil selon l'une quelconque des revendications 1 à 3, dans lequel les entrées de la structure de données de clé comprennent un identifiant de clé de chiffrement et un mode d'utilisation de clé.

5. Appareil selon l'une quelconque des revendications 1 à 4, dans lequel les entrées de la structure de données de clé comprennent en outre une clé de chiffrement.

6. Procédé comprenant les étapes suivantes :
décoder une instruction unique, l'instruction unique devant inclure un ou plusieurs champs pour un code d'opération (1503) et un ou plusieurs champs pour identifier un opérande source qui doit stocker ou coder une adresse de destination, où le code d'opération doit indiquer que les circuits d'exécution doivent lire une structure de données de clé d'un moteur de chiffrement de mémoire (145), chiffrer le contenu de la structure de données de clé lue, générer un code d'authentification de message, MAC, sur au moins la structure de données de clé lue chiffrée, stocker le MAC et la structure de données de clé lue chiffrée à l'adresse de destination ; et
exécuter l'instruction décodée conformément au codes d'opération (1503).

7. Procédé selon la revendication 6, dans lequel le champ de l'identificateur de l'opérande source sert à identifier un registre vectoriel pour stocker l'adresse de destination.

8. Procédé selon la revendication 6, dans lequel le champ de l'identificateur de l'opérande source sert à identifier un emplacement de mémoire pour stocker l'adresse de destination.

9. Procédé selon l'une quelconque des revendications 6 à 8, dans lequel les entrées de la structure de données de clé comprennent un identifiant de clé de chiffrement et un mode d'utilisation de clé.

10. Procédé selon l'une quelconque des revendications 6 à 9, dans lequel les entrées de la structure de données de clé comprennent en outre une clé de chiffrement.

11. Procédé selon l'une quelconque des revendications 6 à 10, comprenant en outre de traduire l'instruction unique en une ou plusieurs instructions d'une architecture de jeu d'instructions différente avant le décodage,
où l'exécution des une ou plusieurs instructions de l'architecture de jeu d'instructions différente doit être équivalente au niveau fonctionnel à l'exécution selon le code d'opération de l'instruction unique.
